# EUROPEAN PATENT APPLICATION

(11) **EP 4 797 638 A1**
(43) Date of publication of application: **26.08.2026**
(21) Application number: 24890374.2
(22) Date of filing: 09.10.2024
(51) Int. Cl.: H04L 27/34

(54) **POWER CONTROL METHOD, AND COMMUNICATION APPARATUS**

(30) Priority: 17.11.2023 CN 202311550289
(71) Applicant: HUAWEI TECHNOLOGIES CO., LTD., Shenzhen, Guangdong 518129 (CN)
(72) Inventor: MA, Qianli, Shenzhen, Guangdong 518129 (CN); HUANG, Huang, Shenzhen, Guangdong 518129 (CN)
(74) Representative: Grünecker Patent- und Rechtsanwälte PartG mbB
(86) International application number: PCT/CN2024/123649
(87) International publication number: WO 2025/103016

(57) **Abstract**

Embodiments of this application provide a power control method and a communication apparatus. The method includes: generating a data signal that has undergone clipping processing; determining a power offset, where the power offset is for determining a transmit power ratio between the data signal and a first channel, and the first channel is a channel that carries the data signal; and determining a target transmit power of the first channel based on the power offset. In this way, the transmit power ratio between the data signal and the first channel is determined based on the power offset, so that the target transmit power of the first channel can be determined, to compensate for an offset, generated in a constellation diagram due to the clipping processing performed on the data signal, of a modulation symbol carried in the data signal, thereby reducing a probability of misjudgment when a receiver side demodulates the data signal.

## Description

This application claims priority to Chinese Patent Application No. 202311550289.X, filed with the China National Intellectual Property Administration on November 17, 2023 and entitled "POWER CONTROL METHOD AND COMMUNICATION APPARATUS", which is incorporated herein by reference in its entirety.

### TECHNICAL FIELD

This application relates to the communication field, and in particular, to a power control method and a communication apparatus.

### BACKGROUND

During signal transmission between a transmitter side and a receiver side, the receiver side may learn of modulation information (for example, a modulation and coding scheme (modulation and coding scheme, MCS)) used when the transmitter side sends a data signal, so that the receiver side can demodulate the received signal based on the modulation information. To improve sensing performance, in a process of sending the data signal, the transmitter side processes a frequency domain waveform of the data signal, for example, increases an amplitude of a part, with a lower amplitude, of the frequency domain waveform, to reduce fluctuations of the frequency domain waveform of the data signal.

However, for the data signal on which the foregoing processing is performed, the receiver side may make misjudgments when performing demodulation based on the modulation information corresponding to the data signal, causing an increase in a bit error rate. Therefore, how to reduce a bit error rate in a data signal transmission process is an urgent problem to be resolved currently.

### SUMMARY

According to the power control method and the communication apparatus provided in embodiments of this application, a bit error rate in a data signal transmission process can be reduced.

To achieve the foregoing objectives, the following technical solutions are used in embodiments of this application.

According to a first aspect, a power control method is provided. The method may be performed by a first apparatus. The first apparatus may be a terminal apparatus, or may be a processor, a module, a chip, a chip system, or the like that implements the method in the terminal apparatus. Alternatively, the first apparatus may be an access network apparatus, or may be a processor, a module, a chip, a chip system, or the like that implements the method in the access network apparatus. An example in which the method is performed by the first apparatus is used below for description. The method includes: generating a data signal that has undergone clipping processing; determining a power offset, where the power offset is for determining a transmit power ratio between the data signal and a first channel, and the first channel is a channel that carries the data signal; and determining a target transmit power of the first channel based on the power offset.

In this embodiment of this application, the first apparatus may determine the power offset, and determine the transmit power ratio between the data signal and the first channel based on the power offset, so that the target transmit power of the first channel can be determined, to compensate for an offset, generated in a constellation diagram due to the clipping processing performed on the data signal, of a modulation symbol carried in the data signal, thereby reducing a probability of misjudgment when a receiver side demodulates the data signal. Therefore, according to the power control method provided in embodiments of this application, a bit error rate in a data signal transmission process can be reduced.

In a possible implementation, the method provided in the first aspect further includes: sending indication information, where the indication information indicates the power offset. In other words, when the power offset is determined by the first apparatus, the first apparatus may send the indication information indicating the power offset to a second apparatus, so that the second apparatus can determine, based on the power offset, the transmit power ratio between the data signal and a reference signal associated with the first channel, and determine, based on the transmit power ratio, an amplitude of the received data signal, thereby reducing a bit error rate when the second apparatus demodulates the data signal.

In a possible implementation, the method provided in the first aspect further includes: receiving indication information, where the indication information indicates the power offset. In other words, the power offset may be indicated, and the first apparatus may determine the power offset based on the indication information, so that flexibility of determining the power offset by the first apparatus can be increased, thereby being applicable to different scenarios.

According to a second aspect, a power control method is provided. The method may be performed by a second apparatus. The second apparatus may be a terminal apparatus, or may be a processor, a module, a chip, a chip system, or the like that implements the method in the terminal apparatus. Alternatively, the second apparatus may be an access network apparatus, or may be a processor, a module, a chip, a chip system, or the like that implements the method in the access network apparatus. An example in which the method is performed by the second apparatus is used below for description. The method includes: generating indication information, and sending the indication information. The indication information indicates a power offset corresponding to a data signal that has undergone clipping processing, the power offset is for determining a transmit power ratio between the data signal and a first channel, and the first channel is a channel that carries the data signal.

According to a third aspect, a power control method is provided. The method may be performed by a second apparatus. The second apparatus may be a terminal apparatus, or may be a processor, a module, a chip, a chip system, or the like that implements the method in the terminal apparatus. Alternatively, the second apparatus may be an access network apparatus, or may be a processor, a module, a chip, a chip system, or the like that implements the method in the access network apparatus. An example in which the method is performed by the second apparatus is used below for description. The method includes: receiving indication information, and determining a power offset based on the indication information. The indication information indicates a power offset corresponding to a data signal that has undergone clipping processing, the power offset is for determining a transmit power ratio between the data signal and a first channel, and the first channel is a channel that carries the data signal.

For technical effects of the second aspect and the third aspect, refer to the first aspect. Details are not described again.

With reference to the first to the third aspects, in a possible implementation, the indication information includes first indication information, the first indication information is for determining the power offset from a candidate power offset set, and the candidate power offset set includes at least two power offsets. It may be understood that indexes or identifiers may be configured, in one-to-one correspondence, for the at least two power offsets in the candidate power offset set, and the first indication information may be an index or an identifier. In other words, the first indication information may be an index or an identifier of the power offset in the candidate power offset set, so that indication overheads of the indication information can be reduced, thereby improving reliability of the indication information.

With reference to the first to the third aspects, in a possible implementation, the indication information further includes second indication information, and the second indication information indicates the candidate power offset set. In other words, the second apparatus may configure the candidate power offset set for the first apparatus, to indicate, to the first apparatus, a plurality of power offsets expected by the second apparatus in a next period of time (for example, radio resource control RRC connection duration).

With reference to the first to the third aspects, in a possible implementation, the power offset is the transmit power ratio between the data signal and the first channel; the power offset is a ratio between an actual amplitude of a modulation symbol and an amplitude of a constellation point corresponding to the modulation symbol, where the modulation symbol is a modulation symbol carried in the data signal; or the power offset is a difference between a complex value corresponding to the modulation symbol and a complex value of the constellation point corresponding to the modulation symbol. In other words, the power offset may be the transmit power ratio between the data signal and the first channel, or may be an amplitude ratio or a complex value difference between the modulation symbol carried in the data signal and the constellation point corresponding to the modulation symbol. Therefore, the first apparatus may flexibly determine the power offset, thereby being applicable to different scenarios.

With reference to the first to the third aspects, in a possible implementation, the target transmit power is determined based on the power offset and a power control parameter of the first channel, and the power control parameter of the first channel includes at least one of the following: a maximum transmit power of a terminal apparatus, an open-loop power control parameter, a closed-loop power control parameter, or a modulation and coding scheme MCS, where the open-loop power control parameter is for determining an open-loop power of the first channel, the closed-loop power control parameter is for determining a closed-loop power adjustment value of the first channel, and the MCS is for determining an MCS power adjustment amount. In other words, the first apparatus may determine the target transmit power of the first channel based on an uplink power control parameter and the power offset. In this case, an uplink power control manner of a system is slightly changed, and has good compatibility. Therefore, implementation complexity can be reduced.

With reference to the first to the third aspects, in a possible implementation, the transmit power ratio between the data signal and the first channel includes any one of the following: a ratio between a transmit power of the data signal and the open-loop power of the first channel; a ratio between the transmit power of the data signal and the closed-loop power adjustment value of the first channel; a ratio between the transmit power of the data signal and the MCS power adjustment amount of the first channel; or a ratio between the transmit power of the data signal and the maximum transmit power of the terminal apparatus corresponding to the first channel. In other words, the transmit power ratio between the data signal and the first channel may include a plurality of power adjustment amounts corresponding to uplink power control, so that the first apparatus can adjust the uplink power control in various manners, thereby supporting the first apparatus in flexibly determining the target transmit power of the first channel.

With reference to the first to the third aspects, in a possible implementation, the open-loop power includes a target receive power and/or a path loss compensation power; and the ratio between the transmit power of the data signal and the open-loop power of the first channel includes a ratio between the transmit power of the data signal and the target receive power, or a ratio between the transmit power of the data signal and the path loss compensation power. In other words, when the power offset is the ratio between the transmit power of the data signal and the open-loop power, the power offset may remain valid throughout an RRC connection, so that the first apparatus determines the target transmit power of the first channel based on the power offset throughout the RRC connection, thereby reducing network overheads.

With reference to the first to the third aspects, in a possible implementation, the target receive power includes a common target receive power and a dedicated target receive power of the terminal apparatus, and the ratio between the transmit power of the data signal and the target receive power includes: a ratio between the transmit power of the data signal and the common target receive power, or a ratio between the transmit power of the data signal and the dedicated target receive power. In other words, when the power offset is the ratio between the transmit power of the data signal and the common target receive power, the power offset may correspond to a plurality of terminal apparatuses in a cell, thereby further reducing network overheads. When the power offset is the ratio between the transmit power of the data signal and the dedicated target receive power of the terminal apparatus, the power offset may be configured for a specific terminal apparatus in a cell, thereby improving flexibility of configuring the power offset.

With reference to the first to the third aspects, in a possible implementation, the target transmit power is determined based on an adjusted open-loop power and at least one of the following: the closed-loop power adjustment value, the MCS power adjustment amount, and the maximum transmit power of the terminal apparatus, and the adjusted open-loop power is obtained by adjusting the open-loop power based on the power offset. In other words, the first apparatus may determine the target transmit power of the first channel by adjusting an open-loop power in the uplink power control, to further reduce changes to the uplink power control and improve compatibility.

With reference to the first to the third aspects, in a possible implementation, the target transmit power is determined based on an adjusted closed-loop power adjustment value and at least one of the following: the open-loop power, the MCS power adjustment amount, and the maximum transmit power of the terminal apparatus, and the adjusted closed-loop power adjustment value is obtained by adjusting the closed-loop power adjustment value based on the power offset. In other words, the first apparatus may determine the target transmit power of the first channel by adjusting the closed-loop power adjustment value in the uplink power control, to further reduce changes to the uplink power control and improve compatibility.

With reference to the first to the third aspects, in a possible implementation, the ratio between the transmit power of the data signal and the MCS power adjustment amount is for adjusting a bits per resource element BPRE. In other words, the first apparatus may adjust the BPRE based on the power offset, to quickly and dynamically adjust the transmit power of the first channel. For example, the first apparatus may send a scheduling request (scheduling request, SR) or a buffer status report (buffer state report, BSR) to the second apparatus, and the second apparatus may determine, based on the SR or the BSR from the first apparatus, an MCS and a power offset for scheduling the first apparatus, so that the first apparatus can adjust the transmit power of the first channel based on the MCS and the power offset that are for scheduling.

With reference to the first to the third aspects, in a possible implementation, the target transmit power is determined based on an adjusted MCS power adjustment amount and at least one of the following: the open-loop power, the closed-loop power adjustment value, and the maximum transmit power of the terminal apparatus, and the adjusted MCS power adjustment amount is obtained by adjusting the MCS power adjustment amount based on the power offset. In other words, the first apparatus may determine the target transmit power of the first channel by adjusting a BPRE in the uplink power control, to further reduce changes to the uplink power control and improve compatibility.

With reference to the first to the third aspects, in a possible implementation, the ratio between the transmit power of the data signal and the maximum transmit power of the terminal apparatus includes a ratio or a difference between a maximum power reduction MPR value and a preconfigured MPR value. In other words, when the power offset is the ratio or the difference between the MPR value and the preconfigured MPR value, the power offset may be adjusted by adjusting the maximum transmit power of the terminal apparatus based on the MPR value, leading to small changes to the uplink power control. Therefore, system compatibility is good, and the first apparatus can effectively determine the target transmit power of the first channel in a scenario in which the transmit power of the first channel is reduced.

With reference to the first to the third aspects, in a possible implementation, the target transmit power is determined based on an adjusted maximum transmit power of the terminal apparatus and at least one of the following: the open-loop power, the closed-loop power adjustment value, and the MCS power adjustment amount, and the adjusted maximum transmit power of the terminal apparatus is obtained by adjusting the maximum transmit power of the terminal apparatus based on the power offset. In other words, the first apparatus may determine the target transmit power of the first channel by adjusting the maximum transmit power of the terminal apparatus in the uplink power control based on the MPR. This can further reduce changes to the uplink power control and improve compatibility.

With reference to the first to the third aspects, in a possible implementation, the power offset is a transmit power ratio between the data signal and a reference signal associated with the first channel; the power offset is an energy per resource element EPRE ratio between the data signal and the reference signal; or the power offset is a ratio between the transmit power ratio and a preconfigured transmit power ratio, where the preconfigured transmit power ratio is an EPRE ratio between the first channel and the reference signal. In other words, the power offset may be the transmit power ratio between the data signal and the reference signal, may be the corresponding EPRE ratio between the data signal and the reference signal, or may be the ratio between the preconfigured transmit power ratio and the transmit power ratio between the data signal and the reference signal, so that the first apparatus can flexibly determine the target transmit power based on different power offsets, thereby being applicable to different scenarios.

With reference to the first to the third aspects, in a possible implementation, the target transmit power is determined based on the power offset and a transmit power of the reference signal. In other words, when determining the transmit power of the reference signal, the first apparatus may determine the target transmit power of the first channel based on the transmit power of the reference signal and the power offset. This is easy to implement.

With reference to the first to the third aspects, in a possible implementation, the reference signal includes a demodulation reference signal DMRS and/or a phase tracking reference signal PTRS. In other words, the first apparatus may determine the target transmit power of the first channel based on the power offset and a transmit power of the DMRS and/or the PTRS, so that flexibility of determining the target transmit power by the first apparatus can be further improved. For example, when the first channel carries the DMRS but does not carry the PTRS, the first apparatus may determine the target transmit power of the first channel based on the power offset and the transmit power of the DMRS. For another example, when high frequency transmission is performed and the first channel carries the DMRS and the PTRS, the first apparatus may determine the target transmit power of the first channel preferentially based on the power offset and the transmit power of the PTRS. For another example, when the first apparatus is a high-speed moving terminal apparatus, and the first channel carries the DMRS and the PTRS, the first apparatus may determine the target transmit power of the first channel preferentially based on the power offset and the transmit power of the DMRS.

With reference to the first to the third aspects, in a possible implementation, the power offset is associated with a transmission parameter that is for transmitting the signal, and the transmission parameter includes at least one of: an MCS for transmitting the data signal, a modulation scheme for transmitting the data signal, a constellation diagram for transmitting the data signal, a modulation order for transmitting the data signal, or a clipping threshold for performing clipping processing on the data signal. In other words, when the transmission parameter has been determined, the first apparatus or the second apparatus may determine the power offset based on the transmission parameter and an association relationship between the power offset and the transmission parameter; or when the power offset has been determined, the first apparatus or the second apparatus may determine the transmission parameter based on the power offset and an association relationship between the power offset and the transmission parameter, so that the first apparatus or the second apparatus can determine flexibility of the power offset or the transmission parameter can be improved, and indication overheads of the power offset or the transmission parameter can be reduced.

According to a fourth aspect, a communication apparatus is provided, to implement the foregoing methods. The communication apparatus may be the first apparatus in any one of the first aspect or the implementations thereof, an apparatus including the first apparatus, or an apparatus included in the first apparatus, for example, a chip; or the communication apparatus may be the second apparatus in any one of the second aspect, the third aspect, or the implementations thereof, an apparatus including the second apparatus, or an apparatus included in the second apparatus, for example, a chip. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible designs, the communication apparatus may include a processing module and a transceiver module. The transceiver module may also be referred to as a transceiver unit, and is configured to implement a sending function and/or a receiving function in any one of the foregoing aspects and the possible implementations of the foregoing aspects. The transceiver module may include a transceiver circuit, a transceiver machine, a transceiver, or a communication interface. The processing module may be configured to implement a processing function in any one of the foregoing aspects and the possible implementations of the foregoing aspects.

In some possible designs, the transceiver module includes a sending module and a receiving module, respectively configured to implement the sending function and the receiving function in any one of the foregoing aspects and the possible implementations of the aspects.

According to a fifth aspect, a communication apparatus is provided, and includes at least one processor. The processor is configured to execute a computer program or instructions, to enable the communication apparatus to perform the method according to any one of the foregoing aspects.

In a possible implementation, the communication apparatus further includes a memory. Optionally, the memory is coupled to the processor, and the memory may be integrated with the processor, or the memory may be independent of the processor. Optionally, the processor is configured to execute a computer program or instructions stored in the memory.

In a possible implementation, the memory is independent of the communication apparatus.

In a possible implementation, the communication apparatus further includes a communication interface, and the communication interface is configured to communicate with a module outside the communication apparatus.

The communication apparatus may be the first apparatus in any one of the first aspect or the implementations thereof, an apparatus including the first apparatus, or an apparatus included in the first apparatus, for example, a chip; or the communication apparatus may be the second apparatus in any one of the second aspect, the third aspect, or the implementations thereof, an apparatus including the second apparatus, or an apparatus included in the second apparatus, for example, a chip.

According to a sixth aspect, a computer-readable storage medium is provided. The computer-readable storage medium stores a computer program or instructions. When the computer program or the instructions are run on a communication apparatus, the communication apparatus is enabled to perform the method according to any one of the foregoing aspects or the implementations thereof.

According to a seventh aspect, a computer program product including instructions is provided. When the computer program product is run on a communication apparatus, the communication apparatus is enabled to perform the method according to any one of the foregoing aspects or the implementations thereof.

According to an eighth aspect, a communication apparatus (for example, the communication apparatus may be a chip or a chip system) is provided. The communication apparatus includes a processor, configured to implement the functions in any one of the foregoing aspects or the implementations thereof.

In some possible designs, the communication apparatus includes a memory, and the memory is configured to store necessary program instructions and data.

In some possible designs, when the apparatus is a chip system, the apparatus may include a chip, or may include a chip and another discrete component.

It may be understood that when the communication apparatus in any one of the fourth aspect to the eighth aspect is a chip, the foregoing sending action/function may be understood as output, and the foregoing receiving action/function may be understood as input.

For technical effects brought by any one of the designs of the fourth aspect to the eighth aspect, refer to technical effects brought by the different designs of the first aspect. Details are not described herein again.

According to a ninth aspect, a communication system is provided. The communication system includes the first apparatus in any one of the first aspect or the implementations thereof, and the second apparatus in any one of the second aspect, the third aspect, or the implementations thereof.

### BRIEF DESCRIPTION OF DRAWINGS

FIG. 1 is a diagram of a 4-QAM constellation diagram according to an embodiment of this application;
FIG. 2 is a diagram of a frequency domain waveform of a signal on which DFT-s-OFDM processing is performed according to an embodiment of this application;
FIG. 3 is a diagram of a modulation symbol on which a modulus value amplification operation is performed according to an embodiment of this application;
FIG. 4 is a diagram of a waveform on which a modulus value amplification operation is performed according to an embodiment of this application;
FIG. 5 is a diagram of an offset between a coordinate point corresponding to an original modulation symbol in a constellation diagram and a constellation point corresponding to the original modulation symbol according to an embodiment of this application;
FIG. 6 is a diagram of a structure of a communication system according to an embodiment of this application;
FIG. 7 is a schematic flowchart of a power control method according to an embodiment of this application;
FIG. 8 is a diagram 1 of a structure of a communication apparatus according to an embodiment of this application; and
FIG. 9 is a diagram 2 of a structure of a communication apparatus according to an embodiment of this application.

### DESCRIPTION OF EMBODIMENTS

For ease of understanding technical solutions provided in embodiments of this application, technologies related to this application are first described briefly. The brief descriptions are as follows.

### I. Modulation

Modulation means that information (for example, data) is transferred based on variations of related parameters (for example, an amplitude, a frequency, or a phase) of carriers, and to-be-sent data (which may be represented by a bit sequence) is mapped to a modulation symbol.

For example, orthogonal modulation may be used in a communication system (for example, a new radio (new radio, NR) system or a long term evolution (long term evolution, LTE) system). The orthogonal modulation may mean that a transmitter (for example, an access network apparatus or a terminal apparatus) modulates data by using two carriers that correspond to a same frequency and that are orthogonal to each other (for example, a phase difference is 90°), to obtain an orthogonal modulation symbol. The quadrature modulation may also be referred to as IQ modulation, where I may represent an in phase (in phase) component, and Q may represent a quadrature (quadrature) component.

For example, the modulation symbol may be represented by a complex value, and for example, may be determined by using a formula (1). $x = a + i ⋅ b = a ⋅ cosωt + b ⋅ sinωt$

In the formula (1), *x* represents a modulation symbol, *a* represents an amplitude of an I component, and *b* represents an amplitude of a Q component. An orthogonal frequency division multiplexing (orthogonal frequency division multiplexing, OFDM) technology may be used in both an uplink (uplink, UL) transmission scheme (to be specific, a terminal apparatus sends data to an access network apparatus) and a downlink (downlink, DL) transmission scheme (to be specific, an access network apparatus sends data to a terminal apparatus), so that modulation symbols *x* are mapped to subcarriers on a one-to-one basis in frequency domain. In other words, a modulus value of the modulation symbol *x* may indicate an amplitude or a power of a frequency domain waveform of a signal that carries the modulation symbol.

The quadrature modulation may include: binary phase shift keying (binary phase shift keying, BPSK), π/2-BPSK, quadrature phase shift keying (quadrature phase shift keying, QPSK), quadrature amplitude modulation (quadrature amplitude modulation, QAM), or the like. For example, the BPSK may mean that information is transferred based on a phase change of a carrier, and an amplitude and a frequency of the carrier remain unchanged. The QAM may mean that information is transferred based on an amplitude change and a phase change of a carrier, and a frequency of the carrier remains unchanged.

It may be understood that, in the BPSK, one modulation symbol may carry 1 bit (where there are two types in total: "0" and "1"), and there are two different modulation symbols in total. In the QPSK, 2 bits may form a group (there are four types in total: "00", "01", "11", and "10"), one modulation symbol may carry 2 bits, and there are four different modulation symbols in total. In 2*^{m}*-QAM, a modulation order is *m,* and one modulation symbol may carry *m* bits, that is, there are 2*^{m}* different modulation symbols in total.

For example, in 16-QAM, 2*^{m}* = 16, *m* = 4, and therefore, one modulation symbol may carry 4 bits. In 64-QAM, 2*^{m}* = 64, *m* = 6, and therefore, one modulation symbol may carry 6 bits.

### II. Constellation diagram (constellation diagram)

The constellation diagram may be used to define amplitude information and phase information of the modulation symbol x, that is, the modulation symbol may be determined based on a constellation point in the constellation diagram. The constellation diagram includes an I-axis (which, for example, may be a horizontal coordinate axis in the constellation diagram) and a Q-axis (which, for example, may be a vertical coordinate axis in the constellation diagram), and therefore the constellation point may be represented by coordinates.

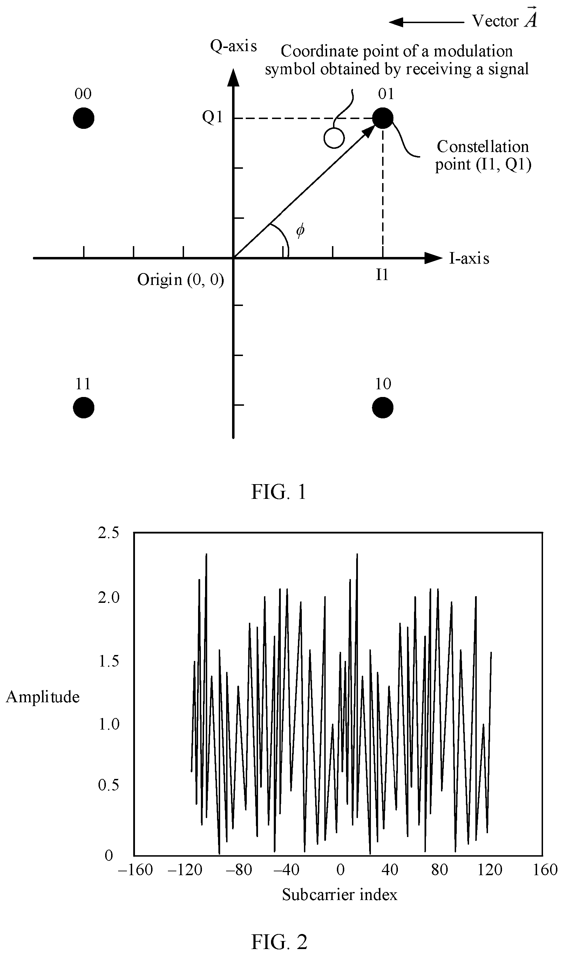

For example, FIG. 1 is a diagram of a 4-QAM constellation diagram according to an embodiment of this application. In 4-QAM, each modulation symbol may carry 2 bits, that is, 2*^{m}* = 4, and *m* = 2. Therefore, the constellation diagram shown in FIG. 1 may include four constellation points, and each constellation point may carry 2 bits. As shown in FIG. 1, a constellation point (I1, Q1) in an upper right corner of FIG. 1 is used as an example. I1 is a coordinate value of the constellation point on the I-axis, and represents amplitude information of an I component in the modulation symbol. Q1 is a coordinate value of the constellation point on the Q-axis, and represents amplitude information of a Q component in the modulation symbol. A vector *̅A̅*̅ whose origin (0, 0) points to the constellation point (I1, Q1) may represent the modulation symbol, and an included angle φ between the vector *̅A̅*̅ and the I-axis may represent phase information corresponding to the modulation symbol.

In other words, the constellation point (I1, Q1) is in one-to-one correspondence with the modulation symbol $x = \frac{I 1}{E} + i ⋅ \frac{Q 1}{E}$*,* so that the modulation symbol may be determined based on the constellation point, where 1/E is a normalization factor corresponding to the modulation symbol, and E is a sum of powers corresponding to four modulation symbols in the constellation diagram.

It may be understood that a distance between a constellation point and the origin (0,0) may indicate a power of a modulation symbol corresponding to the constellation point. A larger distance indicates a larger power of the modulation symbol corresponding to the constellation point. The distance may be referred to as a Euclidean distance (euclidean metric).

Further, each constellation point may correspond to one bit sequence, and the bit sequence may represent to-be-sent data. A correspondence between the to-be-sent data and the modulation symbol may be obtained based on a correspondence between the constellation point in the constellation diagram and the modulation symbol and a correspondence between the constellation point and the bit sequence. For example, the constellation point (I1, Q1) in the upper right corner of FIG. 1 may be in one-to-one correspondence with a bit sequence "01", so that data bits "01" may be modulated as the modulation symbol $x = \frac{I 1}{E} + i ⋅ \frac{Q 1}{E}$ by using the constellation diagram shown in FIG. 1.

It may be understood that, because noise, a non-ideal factor of a transmitter device, or a non-ideal factor of a receiver device exists in a transmission process, a modulation symbol obtained by the receiver side by receiving a signal may be distorted. Therefore, a coordinate point of the modulation symbol in a constellation diagram falls near a constellation point actually corresponding to the modulation symbol. The receiver side may determine, based on a distance in the constellation diagram and between the coordinate point corresponding to the modulation symbol in the constellation diagram and the constellation point, the constellation point corresponding to the modulation symbol.

For example, it is assumed that the coordinate point corresponding to the modulation symbol obtained based on the received signal in the constellation diagram falls in an upper right part (namely, a first quadrant) in FIG. 1, and a distance between the coordinate point and the constellation point (I1, Q1) corresponding to the bit sequence "01" is the shortest. In this case, the receiver side may determine that the constellation point corresponding to the modulation symbol is the constellation point (I1, Q1), and further determine that the data sent by the transmitter side is the bit sequence "01".

### III. Transmit power

When a terminal apparatus sends a data signal to an access network apparatus, a transmit power of the data signal is a transmit power of a channel carrying the data signal, and the transmit power of the channel is defined by technology standard (technology standard, TS) 38.213 in the 3rd generation partnership project (3rd generation partnership project, 3GPP) standard. In addition, a transmit power of a channel is associated with a pilot signal (for example, a demodulation reference signal (demodulation reference signal, DMRS), and/or a phase tracking reference signal (phase tracking reference signal, PTRS)) associated with the channel.

It should be understood that, the pilot signal and the reference signal may be interchanged for description. This is uniformly described herein, and details are not described below again.

The following describes the transmit power of the channel and an association relationship between the channel and the pilot signal.

### 3.1. Transmit power of a channel

The following describes a transmit power of a physical uplink shared channel (physical uplink shared channel, PUSCH) by using an example in which a data signal is carried on the PUSCH.

The transmit power of the PUSCH may be determined by using a formula (2). ${P}_{PUSCH , b , f , c} \left(i, j, {q}_{d}, l\right) = min \left\{\begin{matrix}{P}_{CMAX , f , c} \left(i\right) \\ {P}_{O _ PUSCH , b , f , c} \left(j\right) + 10 {log}_{10} \left({2}^{μ}⋅{M}_{RB , b , f , c}^{PUSCH}\left(i\right)\right) + \\ {α}_{b , f , c} \left(j\right) ⋅ {PL}_{b , f , c} \left({q}_{d}\right) + {Δ}_{TF , b , f , c} \left(i\right) + {f}_{b , f , c} \left(i, l\right)\end{matrix}\right\} \left[dBm\right]$

Definitions of parameters in the formula (2) are as follows:
The parameter *i* may indicate a sending occasion, and *i* is an index of an intra-frame slot. *j* is an index of a parameter set configured by using higher layer signaling. *q_{d}* is a path loss reference signal resource index. *l* is an index of a closed-loop power control state. *c* is an index of a serving cell. *f* is an index of a carrier. *b* is an index of an active bandwidth part (bandwidth part, BWP).

*P*_{PUSCH,*b,f*,*c*}(*i*, *j*, *q_{d}, l*) indicates a transmit power of the PUSCH in the active BWP *b* of the carrier *f* of the serving cell *c.*

*P*_{CMAX,*f*,*c*}(*i*) represents an allowed maximum transmit power of the terminal apparatus on the carrier *f* of the serving cell *c* on the sending occasion *i,* and *P_{CMAX},_{f},_{c}*(*i*) may be configured by using higher layer signaling (for example, radio resource control (radio resource control, RRC) signaling).

*P*_{O_PUSCH,*b*,*f*,*c*}(*j*) may represent a target receive power of the PUSCH in the active BWP *b* of the carrier *f* of the serving cell *c,* that is, a receive power expected by the access network apparatus, and *P*_{O_PUSCH,*b*,*f*,*c*}(*j*) may be determined based on a parameter set configured by using higher layer signaling, where *j* is an index of the parameter set.

*µ* represents a subcarrier spacing configuration.${M}_{RB , b , f , c}^{PUSCH} \left(i\right)$ indicates a number of resource blocks (resource block, RB) occupied by the PUSCH in the active BWP *b* of the carrier *f* of the serving cell *c* on the sending occasion *i.*

*α_{b,f,c}*(*j*) represents a path loss compensation factor corresponding to the PUSCH in the active BWP *b* of the carrier *f* of the serving cell *c.* The path loss compensation factor is configured by using a parameter alpha in the higher layer signaling, and a value range of *α_{b,f,c}*(*j*) may be [0, 1], for example, {0, 0.4, 0.5, 0.6, 0.7, 0.8, 0.9, 1}.

*PL_{b},_{f},_{c}*(*q_{d}*) is a downlink (downlink, DL) estimated path loss corresponding to the PUSCH in the active BWP *b* of the carrier *f* of the serving cell *c,* in unit of dB. The estimated path loss is a downlink path loss estimated by the terminal apparatus based on a path loss reference signal resource index *q_{d},* and a path loss reference signal may be a downlink reference signal such as a channel state information reference signal (channel state information reference signal, CSI-RS) or a synchronization signal block (Synchronization Signal/PBCH Block, SSB).

Δ_{TF,*b*,*f*,*c*}(*i*) is a power adjustment amount determined by a modulation and coding scheme (modulation and coding scheme, MCS), and indicates an MCS power adjustment amount of the PUSCH in the active BWP b of the carrier *f* of the serving cell *c* on the sending occasion *i.* When *Kₛ* = 1.25, ${Δ}_{TF , b , f , c} \left(i\right) = 10 {log}_{10} \left(\left({2}^{BPRE ⋅ {K}_{s}}-1\right)⋅{β}_{offset}^{PUSCH}\right)$, indicating that different MCSs correspond to different power adjustment amounts (more bits per resource element (bits per resource element, BPRE) indicate a larger required transmit power). When *Kₛ* = 0, Δ_{TF*,b,f,c*}(*i*) = 0, indicating that a function of power adjustment based on the MCS is disabled. *Kₛ* is provided by a UE-specific parameter deltaMCS. In addition, when a number of data streams transmitted on the PUSCH is greater than 1, Δ*_{TF,b,f,c}*(*i*) = 0.

For the BPRE, when the PUSCH includes data, ${β}_{offset}^{PUSCH} = 1$, and $BPRE = {\sum }_{r = 0}^{C - 1} {K}_{r} / {N}_{RE}$ , where C represents a number of code blocks (code block, CB) corresponding to the data transmitted on the PUSCH, *Kᵣ* represents a size (size) of an r^{th} code block, and *N_{RE}* represents a number of resource elements (resource element, RE). ${N}_{RE} = N ⋅ {M}_{RB , b , f , c}^{PUSCH} \left(i\right) ⋅ {\sum }_{j = 0}^{{N}_{symb , b , f , c}^{PUSCH} \left(i\right) - 1} {N}_{sc , data}^{RB} \left(i, j\right)$ , where ${N}_{sc , data}^{RB} \left(i, j\right)$ represents a number of subcarriers (or referred to as REs) occupied for sending data (data) when a pilot signal (for example, a DMRS and a PTRS) is not included, and ${N}_{symb , b , f , c}^{PUSCH} \left(i\right)$ represents a number of symbols (for example, OFDM symbols) occupied by the PUSCH in the active BWP *b* of the carrier *f* of the serving cell c on the sending occasion *i,* where *N* ≥ 1.

*f_{b,f,c}*(*i, l*) is a closed-loop power adjustment value of the PUSCH in the active BWP *b* of the carrier *f* of the serving cell *c,* where *l* is an index of a closed-loop power control state.

For specific descriptions of the foregoing formula (2) and parameters thereof, refer to related descriptions in TS 38.213. Details are not described herein.

Further, in an NR system, the data signal may be a data signal on which OFDM processing is performed, for example, a signal on which orthogonal frequency division multiplexing using a cyclic prefix (conventional OFDM using a cyclic prefix, CP-OFDM) processing is performed, or a signal on which discrete Fourier transform-spread orthogonal frequency division multiplexing (discrete Fourier transform-spread OFDM, DFT-s-OFDM) processing is performed. Because a waveform of a signal on which CP-OFDM processing is performed and a waveform of a signal on which DFT-s-OFDM processing is performed have different peak-to-average power ratio (peak to average power ratio, PAPR) characteristics, power amplification linear operation points of the terminal apparatus on the two waveforms are different. When a maximum transmit power of the terminal apparatus is calculated, maximum power reduction (Maximum Power Reduction, MPR) values required by different waveforms need to be considered.

The following describes the MPR.

TS 38.101 specifies MPR values corresponding to CP-OFDM and DFT-s-OFDM in different modulation schemes. The MPR values are defined separately for edge RB, outer RB, and inner RB allocations. A range of the inner RB allocation refers to a frequency range in which all allocated transmitted physical resource blocks (physical resource block, PRB) are in the middle of a maximum RB allocation bandwidth and a distance from an edge of the bandwidth is greater than or equal to half of the allocated transmitted PRBs. Otherwise, an RB allocation is classified as the outer RB allocation. For the edge RB allocation, a number of transmitted RBs is less than or equal to 2 and the RBs are allocated at the edge of the bandwidth.

For example, Table 1 shows MPR values corresponding to DFT-s-OFDM and MPR values corresponding to CP-OFDM for a power class (power class) 2.

**Table 1**

| Modulation scheme | | MPR value (dB) | | |
|---|---|---|---|---|
| | | Edge RB allocations | Outer RB allocations | Inner RB allocations |
| DFT-s-OFDM | π/2-BPSK | ≤3.5 | ≤0.5 | 0 |
| | QPSK | ≤3.5 | ≤1 | 0 |
| | 16-QAM | ≤3.5 | ≤2 | ≤1 |
| | 64-QAM | ≤3.5 | ≤2.5 | |
| | 256-QAM | ≤4.5 | | |
| CP-OFDM | QPSK | ≤3.5 | ≤3 | ≤1.5 |
| | 16-QAM | ≤3.5 | ≤3 | ≤2 |
| | 64-QAM | ≤3.5 | | |
| | 256-QAM | ≤6.5 | | |

It should be understood that, for MPR values corresponding to other power classes, refer to related descriptions in TS 38.101. Details are not described herein.

### 3.2. Association relationship between a channel and a pilot signal

It may be understood that the pilot signal may be a DMRS or a PTRS. The following separately describes an association relationship between a channel and a DMRS and an association relationship between a channel and a PTRS.

### 3.2.1. Association relationship between a channel and a DMRS

If an access network apparatus sends a data signal to a terminal apparatus, the data signal may be carried on a physical downlink shared channel (physical downlink shared channel, PDSCH). A transmit power of the PDSCH may be determined based on a transmit power of a reference signal corresponding to the PDSCH and an energy per resource element (energy per resource element, EPRE) ratio between the PDSCH and the reference signal.

It should be understood that, when demodulating a non-constant modulus modulation signal (for example, a QAM signal), a receiver side may determine an amplitude of the data signal by using a ratio between an EPRE of a PDSCH (or a PUSCH) and an EPRE of a demodulation reference signal (demodulation reference signal, DMRS) of a port corresponding to the PDSCH. The EPRE ratio between the PDSCH (or the PUSCH) and the DMRS is determined by a number of DMRS code division multiplexing (code division multiplexing, CDM) groups and a DMRS configuration type that are indicated in downlink control information (downlink control information, DCI).

For example, the EPRE ratio between the PDSCH and the DMRS is shown in Table 2.

**Table 2**

| Number of DMRS CDM groups without data | DMRS configuration type 1 | DMRS configuration type 2 |
|---|---|---|
| 1 | 0 dB | 0 dB |
| 2 | -3 dB | -3 dB |
| 3 | - | -4.7 dB |

For details about a transmit power of a data signal in downlink transmission, the EPRE, the DMRS configuration type, and an EPRE ratio between a PUSCH and a DMRS, refer to related descriptions in TS 38.214. Details are not described herein.

### 3.2.2. Association relationship between a channel and a PTRS

It should be understood that there is an association between a PTRS and a DMRS (for example, a PTRS port is associated with one DMRS port), and the PTRS may also be used for demodulation. The following separately describes a transmit power ratio between a PUSCH and a PTRS and a transmit power ratio between a PDSCH and a PTRS.

It may be understood that, for uplink transmission, a data signal may be a data signal on which CP-OFDM processing is performed, or a signal on which DFT-s-OFDM processing is performed. The DFT-s-OFDM processing means that DFT is performed before OFDM processing (that is, transform precoding (transform precoding)). Therefore, PUSCH transmission may be classified into PUSCH transmission with transform precoding enabled (transform precoding enabled) and PUSCH transmission with transform precoding disabled. Further, for the PUSCH transmission with transform precoding enabled, a PTRS is mapped before transform precoding. Therefore, transmit power ratios about a PTRS are different for the PUSCH transmission with transform precoding disabled and the PUSCH transmission with transform precoding enabled.

The following separately describes a transmit power ratio between a PUSCH with transform precoding disabled and a PTRS and a transmit power ratio between a PUSCH with transform precoding enabled and a PTRS.

### 3.2.2.1. Transmit power ratio between a PUSCH with transform precoding disabled and a PTRS

A transmit power ratio (PUSCH to PTRS power ratio per layer per RE) between a PUSCH and a PTRS per layer per RE is ${ρ}_{PTRS}^{PUSCH}$, and ${ρ}_{PTRS}^{PUSCH} = - {α}_{PTRS}^{PUSCH} \left[dB\right]$. ${α}_{PTRS}^{PUSCH}$ is a factor (factor) associated with the transmit power ratio between the PUSCH and the PTRS. The factor ${α}_{PTRS}^{PUSCH}$ is related to the following parameters: a number *Qₚ* of PTRS ports used by the terminal apparatus in uplink scheduling being {1, 2}, a number ${n}_{layer}^{PUSCH}$ of PUSCH layers, and a higher-layer parameter *ptrs-Power.* For details, refer to Table 3.

**Table 3**

| $UL - PTRS -$ $power /$ ${α}_{PTRS}^{PUSCH}$ | | Number of PUSCH layers (the number of PUSCH layers ${n}_{layer}^{PUSCH}$) | | | | | | |
|---|---|---|---|---|---|---|---|---|
| | 1 | 2 | | 3 | | 4 | | |
| | All cases (all cases) | Full-coherent | Partial-coherent, non-coherent, and non-codebook-based | Full-coherent | Partial-coherent, non-coherent, and non-codebook-based | Full-coherent | Partial-coherent | Non-coherent and non-codebook -based |
| 00 | 0 | 3 | 3*Qₚ* - 3 | 4.77 | 3*Qₚ* - 3 | 6 | 3*Qₚ* | 3*Qₚ* - 3 |
| 01 | 0 | 3 | 3 | 4.77 | 4.77 | 6 | 6 | 6 |
| 10 | Reserved (reserved) | | | | | | | |
| 11 | Reserved | | | | | | | |

The following describes the parameters in Table 3.$UL - PTRS - power / {α}_{PTRS}^{PUSCH}$ is indicated by the higher-layer parameter *ptrs-Power,* and a value range of the parameter is [00, 01, 10, 11]. For all layers (1 to 4 layers), corresponding to 10 and 11 are reserved.

The full-coherent (full coherent) refers to full coherent transmission, to be specific, a terminal apparatus supports coherent transmission on all antenna ports. The partial-coherent (partial coherent) refers to partial coherent transmission, to be specific, antenna ports in a same coherent transmission group can be used for coherent transmission, and antenna ports in different coherent transmission groups cannot be used for coherent transmission. The non-coherent (non-coherent) refers to non-coherent transmission, to be specific, no antenna port can be used for coherent transmission, or a terminal apparatus does not support coherent transmission. The non-codebook-based (non-codebook based) means that PUSCH transmission is based on a non-codebook.

It should be understood that, if a terminal apparatus does not configure the higher-layer parameter *ptrs-Power,* or the PUSCH is based on a non-codebook, the terminal apparatus assumes (assume) that the higher-layer parameter *ptrs-Power* is 00.

It should be understood that a series of values (for example, 0, *3, 3Qₚ -* 3, 4.77, or 6) of ${α}_{PTRS}^{PUSCH}$ corresponding to 00 or 01 in Table 3 are in unit of dB.

### 3.2.2.2. Transmit power ratio between a PUSCH with transform precoding enabled and a PTRS

A transmit power ratio between a PUSCH with transform precoding enabled and a PTRS may be determined by using a scaling factor β' (or referred to as a PTRS scaling factor (PT-RS scaling factor)). β' is an amplitude ratio (β' is the ratio between amplitude of one of the outermost constellation points for the modulation scheme used for PUSCH and one of the outermost constellation points for π/2-BPSK as defined in clause 6.2.3 of [TS 38.214]) between an outermost constellation point for a modulation scheme used for PUSCH modulation and an outermost constellation point for π/2-BPSK.

**Table 4**

| Modulation scheme | β' |
|---|---|
| π/2-BPSK | 1 |
| QPSK | 1 |
| 16-QAM | $3 / \sqrt{5}$ |
| 64-QAM | $7 / \sqrt{21}$ |
| 256-QAM | $15 / \sqrt{85}$ |

It should be understood that, for a PDSCH, when a network schedules, for a terminal apparatus, one or more PTRS ports associated with the PDSCH, if the terminal apparatus configures a higher-layer parameter *epre-Ratio,* an EPRE ratio *ρ_{PTRS},* corresponding to the PTRS port, of a PTRS to a PDSCH per layer per RE may be determined by using Table 5.

**Table 5**

| *epre-Ratio* | Number of PDSCH layers with a DMRS associated with a PTRS port (the number of PDSCH layers with DM-RS associated to the PTRS port) | | | | | |
|---|---|---|---|---|---|---|
| | 1 | 2 | 3 | 4 | 5 | 6 |
| 0 | 0 | 3 | 4.77 | 6 | 7 | 7.78 |
| 1 | 0 | 0 | 0 | 0 | 0 | 0 |
| 2 | Reserved | | | | | |
| 3 | Reserved | | | | | |

It may be understood that values of the higher-layer parameter *epre-Ratio* in Table 5 are [0, 1, 2, 3], where *ρ_{PTRS}* corresponding to 2 and 3 is reserved, and a series of values (for example, 0, 3, 4.77, 6, 7, or 7.78) corresponding to *ρ_{PTRS}* Table 3 are in unit of dB.

It should be understood that, if a terminal apparatus does not configure the higher-layer parameter *epre-Ratio,* the terminal apparatus assumes (assume) that the higher-layer parameter *epre-Ratio* is 0.

### IV. Sensing

Sensing may mean that a communication entity (for example, an access network apparatus or a terminal apparatus) in a wireless network obtains information about an ambient environment by sending and receiving a signal on which an object performs an action. The information about the ambient environment may include information about one or more objects in the environment. The information about the object may include a location, a shape, a speed, or the like of the object. The object may change a transmission feature of the signal, for example, may change a transmission direction of the signal, change a transmission gain of the signal, change a transmission delay of the signal, or change a frequency of the signal. Therefore, the communication entity may implement sensing by obtaining a change of the transmission feature of the signal. For example, channel response information obtained through channel estimation may be used to feed back a change of the signal after the signal passes through different transmission environments (also referred to as channels). Therefore, when the signal passes through the object, the channel response information is used to feed back a change of the object on the transmission feature of the signal.

For example, the channel response information may include a channel frequency response (channel frequency response, CFR) or channel state information (channel state information, CSI). This is not specifically limited in embodiments of this application.

It should be understood that the "signal on which the object performs the action" may include a signal reflected by the object, a signal refracted by the object, a signal scattered by the object, a signal diffracted by the object, a signal transmitted by the object, or the like. This is not specifically limited.

The signal may be a signal on which OFDM processing is performed, for example, a signal on which CP-OFDM processing is performed, or a signal on which DFT-s-OFDM processing is performed. The signal on which the DFT-s-OFDM processing is performed has a low peak-to-average power ratio (peak to average power ratio, PAPR) of a waveform, can meet a coverage requirement, and is applicable to a sensing service.

It should be understood that, a frequency domain waveform of a multi-carrier superposed signal on which processing similar to OFDM processing is performed may have a large fluctuation. For example, FIG. 2 is a diagram of a frequency domain waveform of the signal on which DFT-s-OFDM processing is performed. As shown in FIG. 2, a horizontal coordinate is a subcarrier index (including 240 subcarriers), and a vertical coordinate is an amplitude corresponding to the subcarrier. The frequency domain waveform shown in FIG. 2 has a large fluctuation, which is not conducive to sensing. Specific reasons are as follows.

Both the CFR and the CSI represent impact of a channel on a transmitted signal in frequency domain, and a relationship between a received signal and a sent signal in frequency domain may be represented by using a formula (3). $Y \left[k\right] = H \left[k\right] X \left[k\right] + N \left[k\right]$

*k* represents a subcarrier, *Y[k]* represents a frequency domain amplitude of a received signal corresponding to the subcarrier *k, X*[*k*] represents a frequency domain amplitude of a sent signal corresponding to the subcarrier *k, N*[*k*] represents a frequency domain amplitude of noise corresponding to the subcarrier *k,* and *H*[*k*] represents a channel frequency domain response corresponding to the subcarrier *k*, that is, channel response information that needs to be solved.

Further, for a subcarrier with a smaller amplitude in FIG. 2, *X*[*k*] in the formula (3) is smaller, and therefore, *Y[k]* is smaller, and *Y[k]* needs to be amplified when *H*[*k*] is resolved. However, amplification of *Y[k]* amplifies noise *N*[*k*]*,* and further causes an inaccurate frequency domain response of a channel to be solved, thereby causing sensing performance deterioration.

It may be understood that a sensing performance deterioration degree can be reduced by reducing the fluctuation of the frequency domain waveform of the signal. For example, amplitude increase may be performed on a part of waveform with a low amplitude in a manner of floor clipping (floor clipping). To be specific, modulus value amplification processing is performed on a modulation symbol with a low modulus value, to reduce an amplification coefficient of *Y[k],* or avoid amplification of *Y[k],* thereby reducing a degree of sensing performance deterioration, or avoiding sensing performance deterioration. The following describes the floor clipping in detail.

### V. Floor clipping

In a possible implementation, a transmitter side may amplify a modulus value of a modulation symbol whose modulus value is less than a clipping threshold in a modulation symbol sequence. The modulation symbol sequence may be a modulation symbol sequence obtained by modulating data based on a constellation diagram, and each modulation symbol may be mapped to one subcarrier.

Further, after the modulation symbol whose modulus value is less than the clipping threshold is amplified, the modulus value may be equal to the clipping threshold, and a phase remains unchanged, that is, an included angle φ remains unchanged.

For example, the foregoing modulus value amplification operation may be expressed by using a formula (4). $\left\{\begin{matrix}X \left(n\right) = Th ⋅ {e}^{j 2 π ∗ angle \left(X\left(n\right)\right)} & if \left|X\left(n\right)\right| < Th \\ X \left(n\right) = X \left(n\right) & if \left|X\left(n\right)\right| \geq Th\end{matrix}\right.$

In the formula (4), *X(n)* may represent a modulation symbol in the modulation symbol sequence, *n* is a sequence number of the modulation symbol in the modulation symbol sequence, *n* may correspond to a subcarrier index, *angle*(*X*(*n*)) represents an included angle corresponding to the modulation symbol, and *Th* may represent the clipping threshold.

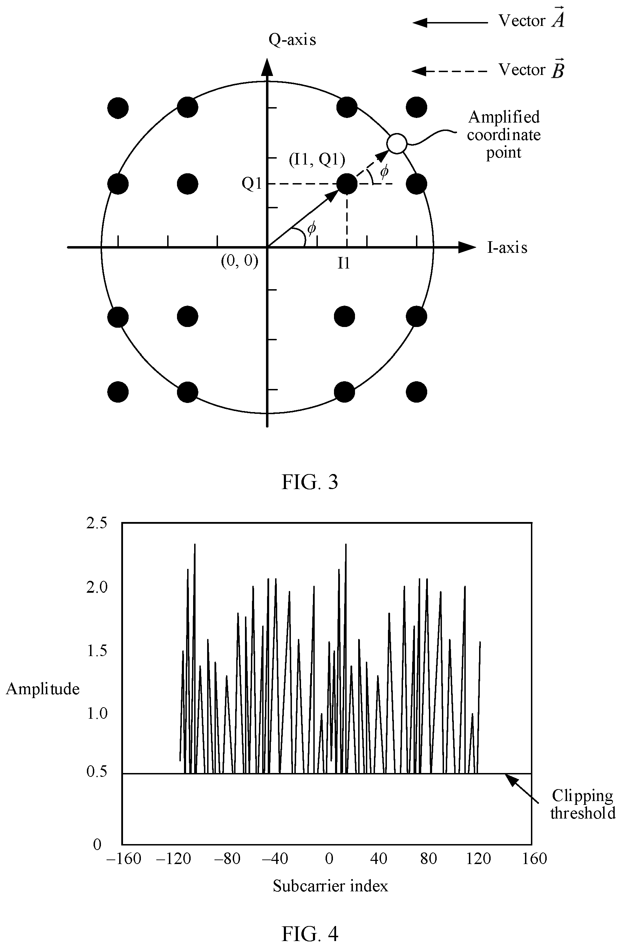

An example in which a *Th · e*^{*j2π*angle*(*X*(*n*))} operation is performed on the modulation symbol corresponding to the constellation point (I1, Q1) in FIG. 1 is used for description with reference to FIG. 3. As shown in FIG. 3, the modulation symbol corresponding to the constellation point (I1, Q1) is *X(n),* and the included angle φ is *angle*(*X*(*n*)). It is assumed that the modulus value |*X*(*n*)| of the modulation symbol *X(n)* is less than the clipping threshold *Th.* After the *Th · e*^{*j2π*angle*(*X*(*n*))} operation is performed on the modulation symbol *X(n),* an amplified coordinate point corresponding to the modulation symbol *X(n)* is on a circle with an origin as a center and a radius of *Th,* and an included angle corresponding to the amplified coordinate point remains unchanged. A vector that the origin (0, 0) points to the amplified coordinate point may represent a modulation symbol *Th · e*^{*j2π*angle*(*X*(*n*))} obtained by amplifying the modulus value of the modulation symbol *X(n).* The modulation symbol *Th· e*^{*j2π*angle*(*X*(*n*))} obtained by amplifying the modulus value may be a vector sum between a vector *̅A̅*̅ and a vector *B̅.* In other words, the vector *̅B̅*̅ in FIG. 3 may represent a symbol introduced in the modulus value amplification operation. Because the introduced symbol actually does not transmit data, the introduced symbol may be considered as an interference symbol.

It may be understood that, the modulus value amplification operation corresponding to the formula (4) is merely an example, and another modulus value amplification manner may be used. For example, a phase does not need to remain unchanged. Further, the foregoing modulus value amplification operation may be performed before subcarrier mapping, and a modulation symbol sequence obtained through the modulus value amplification operation may be used to generate a signal through subcarrier mapping, OFDM processing, and the like.

Further, in comparison with an original frequency domain waveform on which no modulus value amplification operation is performed, in a frequency domain waveform of a signal generated based on the modulation symbol obtained through the modulus value amplification operation, a part of waveform whose amplitude is less than the clipping threshold in the original frequency domain waveform is eliminated. For example, the frequency domain waveform in FIG. 2 is an original frequency domain waveform. When the clipping threshold is 0.5, after the foregoing modulus value amplification operation is performed on the original frequency domain waveform in FIG. 2, a part of waveform whose amplitude value is less than 0.5 in the original frequency domain waveform is eliminated. Details are shown in FIG. 4.

It may be understood that, the foregoing modulus value amplification operation introduces an interference symbol (that is, the interference symbol introduced in FIG. 3) based on the original modulation symbol , so that the modulation symbol sequence obtained through the foregoing modulus value amplification operation may be decomposed into two parts: an original modulation symbol sequence and an interference symbol sequence. It may be understood that the original modulation symbol sequence is a modulation symbol sequence on which the modulus value amplification operation is not performed.

Further, a clipping signal generated based on the foregoing modulation symbol sequence obtained through the modulus value amplification operation may include: a data signal for carrying the original modulation symbol sequence, and an interference signal for carrying the interference symbol. When receiving the signal, a receiver side considers the interference signal as noise and suppresses the interference signal, to obtain the data signal, and then performs demodulation based on the data signal.

It may be understood that, when the clipping signal is sent, both a data signal and an interference signal are sent. A ratio between a transmit power for sending the data signal and a transmit power for sending the interference signal may be determined based on the clipping threshold. Further, the interference signal occupies a transmit power originally allocated for sending data, that is, the allocated transmit power is for a data signal that is for carrying an original modulation symbol. Therefore, when the data signal and the interference signal are sent at the same time, the interference signal occupies the allocated transmit power. Consequently, an actual transmit power for sending the data signal is less than the allocated transmit power. Further, when the actual transmit power for sending the data signal is less than the allocated transmit power, a modulus value corresponding to the original modulation symbol is proportionally reduced, and a Euclidean distance value corresponding to the original modulation symbol in a constellation diagram is also proportionally reduced. Consequently, an offset exists between a constellation point and a coordinate point, in the constellation diagram, corresponding to the original modulation symbol in the constellation diagram.

For example, the transmit power allocated by the transmitter side to the data signal is 10 power units, and the transmit power of the interference signal is three power units. Therefore, the transmit power of the data signal is seven units. In this case, the transmit power of the data signal is reduced from 10 units to seven units, that is, the transmit power of the data signal is reduced to 7/10 of the original 10 power units. In other words, a modulus value of each original modulation symbol in the original modulation symbol sequence carried in the data signal is proportionally reduced to 7/10 of an original modulus value. Therefore, the offset exists between the coordinate point corresponding to the original modulation symbol and the actual constellation point, in the constellation diagram, corresponding to the original modulation symbol in the constellation diagram.

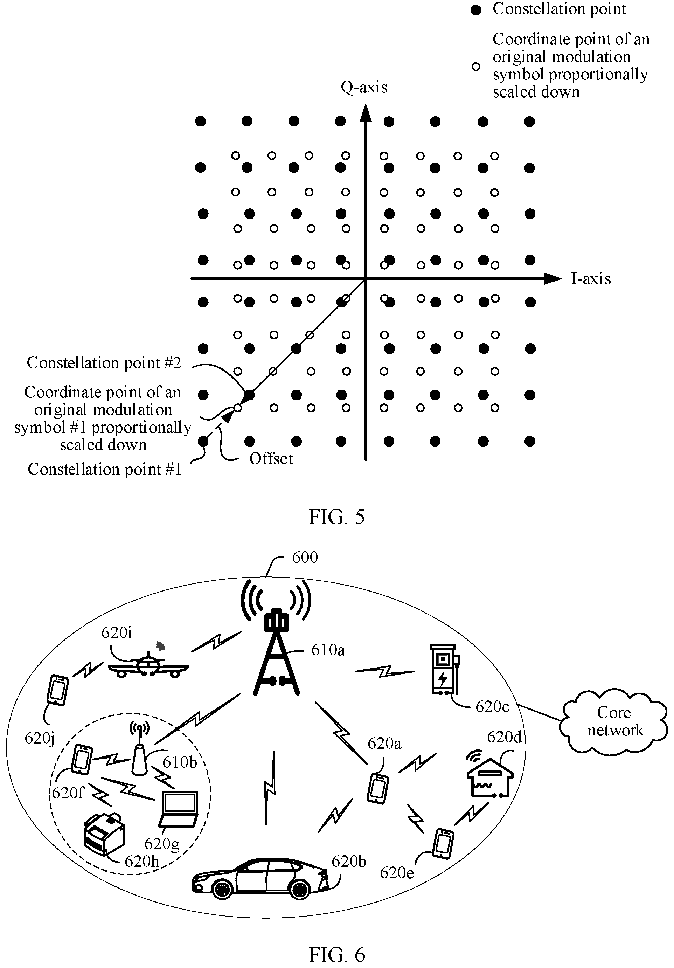

The following further describes the foregoing offset with reference to FIG. 5.

FIG. 5 is a constellation diagram corresponding to 64-QAM. As shown in FIG. 5, black dots represent constellation points in the 64-QAM constellation diagram, and unfilled dots represent coordinate points corresponding to original modulation symbols that are proportionally reduced in the constellation diagram. It can be learned from FIG. 5 that coordinate points that correspond to the original modulation symbols and that need to be in one-to-one correspondence with the constellation points in the constellation diagram are shifted toward an origin due to proportional reduction of modulus values of the original modulation symbols.

It may be understood that a larger clipping threshold in the foregoing modulus value amplification operation indicates a larger modulus value corresponding to an interference symbol, and a larger proportion of reduction of a modulus value of an original symbol, thereby increasing a probability of misjudgment when a receiver side demodulates a signal.

For example, in FIG. 5, a constellation point corresponding to an original modulation symbol #1 during modulation is a constellation point #1. When the clipping threshold is large, a coordinate point of the original modulation symbol #1 obtained through proportional reduction is closer to a constellation point #2 than the constellation point #1. Therefore, a symbol obtained by the receiver side by receiving a data signal is closer to the constellation point #2, and a constellation point corresponding to the symbol is incorrectly determined as the constellation point #2.

In other words, a larger clipping threshold in the foregoing modulus value amplification operation indicates a larger bit error rate of signal transmission.

In view of this, embodiments of this application provide a power control method, to reduce a bit error rate in a data signal transmission process.

The following describes the technical solutions in embodiments of this application with reference to the accompanying drawings in embodiments of this application.

For ease of understanding of embodiments of this application, the following descriptions are provided before embodiments of this application are described.
1. In embodiments of this application, for ease of description, when numbering or indexing is involved, consecutive numbering may be performed starting from 1, 0, or any parameter.
2. "Pre-definition", "definition in advance", "preconfiguration (or referred to as configuration in advance)" and "protocol agreement" may be interchanged, and pre-definition may be implemented by pre-storing corresponding code or a corresponding table, or in another manner that may indicate related information in an apparatus (for example, a first apparatus or a second apparatus). A specific implementation is not limited in embodiments of this application. "Storing" may be storing something is stored in one or more memories.
3. "Protocol" in embodiments of this application may be a standard protocol in the communication field, and for example, may include a long term evolution (long term evolution, LTE) protocol, an NR (new radio, NR) protocol, a wireless fidelity (wireless fidelity, Wi-Fi) protocol, and a related protocol applied to a future communication system (for example, a 6th generation (6th generation, 6G) communication system). This is not limited in embodiments of this application.
4. In embodiments of this application, descriptions such as "when...", "in a case of...", "in the event that", and "if" all mean that a device (for example, a first apparatus or a second apparatus) performs corresponding processing in an objective case, and are not limited to time, and the device is not required to perform a determining action during implementation. This does not mean that there is another limitation.
5. In embodiments of this application, "sending information to... (a first apparatus)" may be understood as that a destination end of the information is the first apparatus, and may include directly or indirectly sending the information to the first apparatus, and "receiving information from... (a second apparatus)" or "receiving information that is from... (a second apparatus)" may be understood as that a source end of the information is the second apparatus, and may include directly or indirectly receiving the information from the second apparatus. Information may undergo necessary processing, for example, a format change, between a source end and a destination end for sending of the information. However, the destination end may understand valid information from the source end. A similar expression in this application may be understood similarly, and details are not described herein again.
6. In descriptions of embodiments of this application, unless otherwise specified, "and/or" in embodiments of this application represents that three relationships may exist. For example, A and/or B may represent the following three cases: Only A exists, both A and B exist, and only B exists, where A and B may be in a singular form or a plural form. In addition, "at least one item (piece) of the following" or a similar expression thereof means any combination of these items, including a singular item (piece) or any combination of plural items (pieces). In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used for indicating an example, an illustration, or an explanation.

Embodiments of this application may be applied to an LTE system or an NR system (which may also be referred to as a 5th generation (5th generation, 5G) system), an LTE-NR hybrid networking system, a vehicle to everything (vehicle to everything, V2X) system, a device-to-device (device to device, D2D) system, a machine to machine (machine to machine, M2M) communication system, an internet of things (internet of things, IoT) system (for example, a narrowband internet of things (narrow band internet of things, NB-IoT) system), a Wi-Fi system, a non-terrestrial network (non-terrestrial network, NTN) system, a 6G system, and another next-generation communication system. Alternatively, the communication system may be an open radio access network (open radio access network, O-RAN or ORAN) or a cloud radio access network (cloud RAN, CRAN). This is not limited.

It may be understood that embodiments of this application may be applied to a plurality of different service scenarios, for example, enhanced mobile broadband (enhanced mobile broadband, eMBB), an ultra-reliable low-latency communication (ultra-reliable low-latency communication, URLLC) service, massive machine-type communication (massive machine-type communication, mMTC), immersive communication (immersive communication), massive communication (massive communication), ubiquitous connections (ubiquitous connections), integrated artificial intelligence and communication (integrated artificial intelligence and communication), or integrated sensing and communication (integrated sensing and communication). To meet further requirements of the foregoing different service application scenarios for latency, reliability, coverage, and the like, more flexible resource allocation is needed.

In addition, a communication architecture and a service scenario described in embodiments of this application are intended to describe the technical solutions in embodiments of this application more clearly, and do not constitute a limitation on the technical solutions provided in embodiments of this application. A person of ordinary skill in the art may know that with the evolution of the communication architecture and the emergence of new service scenarios, the technical solutions provided in embodiments of this application are also applicable to similar technical problems.

FIG. 6 is a diagram of a structure of a communication system 600 according to an embodiment of this application. FIG. 6 is described by using an example in which the communication system 600 includes at least one access network apparatus (for example, 610a or 610b in FIG. 6) and at least one terminal apparatus (for example, 620a to 620j in FIG. 6) connected to the access network apparatus. It should be understood that the access network apparatus may be connected to a core network (core network, CN) in a wireless or wired manner. A CN device in the CN and the access network apparatus may be different physical apparatuses, or may be a same physical apparatus that integrates a logical function of the CN and a logical function of a radio access network. It may be understood that a number of access network apparatuses and a number of terminal apparatuses in FIG. 6 are merely examples, and may be larger or smaller. This is not specifically limited in this embodiment of this application.

In a possible implementation, the access network apparatus in this embodiment of this application may be an apparatus communicating with a terminal apparatus. The access network apparatus may also be referred to as a RAN device, an access node, a RAN entity, a RAN node, or the like. As shown in FIG. 6, the plurality of access network apparatuses in the communication system 600 may be nodes of a same type, or may be nodes of different types. In some scenarios, roles of the access network apparatus and the terminal apparatus are relative. For example, the network element 620i in FIG. 6 may be a helicopter or an unmanned aerial vehicle, and may be configured as a mobile base station. For the terminal apparatus 620j that accesses the communication system 600 via the network element 620i, the network element 620i may be the base station 610a. However, for the base station 610a, the network element 620i is a terminal apparatus. The access network apparatus and the terminal apparatus are sometimes referred to as communication apparatuses. For example, the network elements 610a and 610b in FIG. 6 may be understood as communication apparatuses having a base station function, and the network elements 620a to 620j may be understood as communication apparatuses having a terminal function.

In a possible scenario, the access network apparatus may be a transmission and reception point (transmission and reception point, TRP), a base station, a remote radio unit (remote radio unit, RRU) or a baseband unit (baseband unit, BBU) (which may also be referred to as a digital unit (digital unit, DU)) of a split base station, a broadband network gateway (broadband network gateway, BNG), an aggregation switch, a non-6GPP access device, a relay station, an access point, or the like. The access network apparatus may be a macro base station (for example, the network element 610a in FIG. 6), a micro base station or an indoor station (for example, the network element 610b in FIG. 6), a relay node or a donor node, or a radio controller in a CRAN scenario. Optionally, the access network apparatus may alternatively be a server, a wearable device, a vehicle, a vehicle-mounted device, or the like. For example, the access network apparatus in a V6X system may be a roadside unit (road side unit, RSU). In addition, the access network apparatus in this embodiment of this application may be an eNB or an eNodeB (evolved NodeB) in LTE, a radio controller in a CRAN scenario, a base station (for example, a next generation NodeB (gNodeB, gNB)) in a 5G communication system, a base station in a future evolved system (for example, a 6G communication system), or the like. This is not specifically limited herein.

In a possible implementation, in some deployments, the gNB may include a central unit (central unit, CU), a DU, a CU-control plane (control plane, CP), a CU-user plane (user plane, UP), or a radio unit (radio unit, RU). The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and/or a packet data convergence protocol (packet data convergence protocol, PDCP) layer. The DU is responsible for processing a physical (physical, PHY) layer protocol and a real-time service, and implements functions of a radio link control (radio link control, RLC) layer, a media access control (media access control, MAC) layer, and a PHY layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network apparatus may be a device including one or more of a CU node, a DU node, and an AAU node. In addition, the CU may be classified as an access network apparatus in a RAN, or the CU may be classified as an access network apparatus in a CN. This is not limited in this embodiment of this application.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples in embodiments of this application for description. In embodiments of this application, any unit in the CU (or the CU-CP and the CU-UP), the DU, and the RU may be implemented by a software module, a hardware module, or a combination of a software module and a hardware module.

In a possible implementation, the terminal apparatus in this embodiment of this application may be a device configured to implement a wireless communication function, for example, a terminal or a chip that may be used in a terminal. The terminal may be user equipment (user equipment, UE), an access terminal, a terminal unit, a terminal station, a mobile station, a remote station, a remote terminal, a mobile device, a terminal agent, or the like in a 5G network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a vehicle-mounted device, a wearable device, an AR terminal apparatus, a wireless terminal in industrial control (industrial control), a wireless terminal in autonomous driving (autonomous driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like. In a possible implementation, the terminal apparatus may be mobile, or may be fixed. This is not limited.

It may be understood that the communication system 600 may support a plurality of different service application scenarios, for example, enhanced mobile broadband (enhanced mobile broadband, eMBB), an ultra-reliable low-latency communication (ultra-reliable low-latency communication, URLLC) service, massive machine-type communication (massive machine-type communication, mMTC), immersive communication (immersive communication), massive communication (massive communication), ubiquitous connections (ubiquitous connections), integrated artificial intelligence and communication (integrated artificial intelligence and communication), or integrated sensing and communication (integrated sensing and communication). This is not specifically limited in this embodiment of this application.

An embodiment of this application provides a power control method. The method may be performed by a first apparatus. The first apparatus may be the terminal apparatus in FIG. 6, or a module or a unit (for example, a chip, a chip system, a chip circuit, or a circuit of the terminal apparatus) of the terminal apparatus, or may be an access network apparatus, or a module or a unit (for example, a chip, a chip system, a chip circuit, or a circuit of the access network apparatus) of the access network apparatus.

In a possible implementation, the first apparatus generates a data signal that has undergone clipping processing; the first apparatus determines a power offset, where the power offset is for determining a transmit power ratio between the data signal and a first channel, and the first channel is a channel that carries the data signal; and the first apparatus determines a target transmit power of the first channel based on the power offset. In this way, the first apparatus may determine the power offset, and determine the transmit power ratio between the data signal and the first channel based on the power offset, so that the target transmit power of the first channel can be determined, to compensate for an offset, generated in a constellation diagram due to the clipping processing performed on the data signal, of a modulation symbol carried in the data signal, thereby reducing a probability of misjudgment when a receiver side demodulates the data signal. Therefore, according to the power control method provided in embodiments of this application, a bit error rate in a data signal transmission process can be reduced.

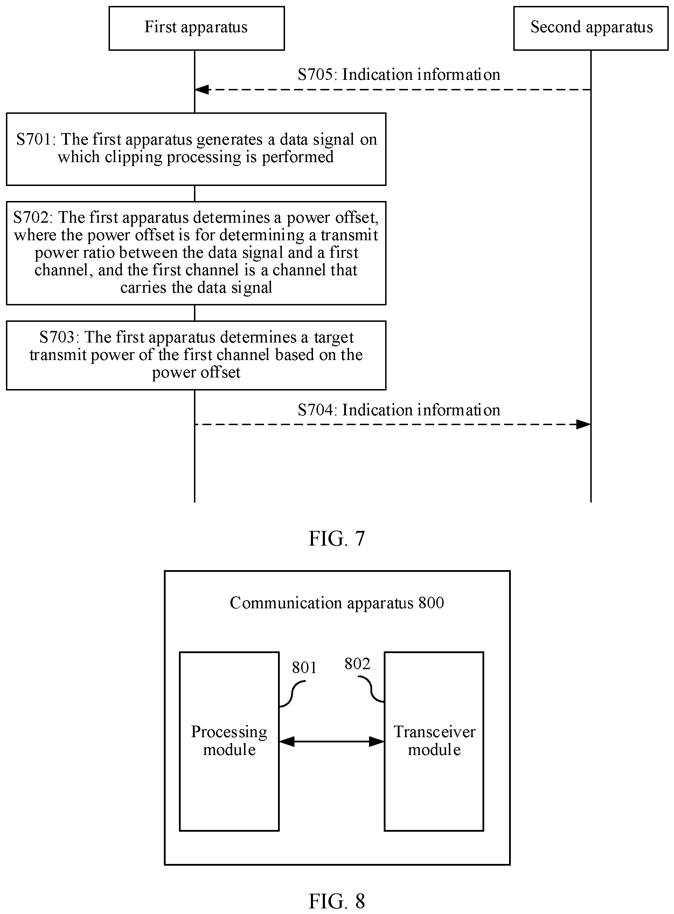

With reference to FIG. 7, the following describes in detail the method provided in embodiments of this application.

It should be understood that, in the following embodiments of this application, a name of a signal between devices or apparatuses, a name of each parameter in a signal, a name of information carried in a signal, or the like is merely an example, and another name may alternatively be used in a specific implementation. This is not specifically limited in embodiments of this application.

In addition, the method provided in embodiments of this application may be applied to a first apparatus. The first apparatus may be the terminal apparatus in FIG. 6, or a module or a unit (for example, a chip, a chip system, a chip circuit, or a circuit of the terminal apparatus) of the terminal apparatus. A second apparatus may be the access network apparatus in FIG. 6, or a module or a unit (for example, a chip, a chip system, a chip circuit, or a circuit of the access network apparatus) of the access network apparatus.

The first apparatus may operate in a high frequency band, for example, a millimeter wave band or a terahertz band, or may operate in a low frequency band, for example, a 700 MHz, 900 MHz, 2.1 GHz, 2.6 GHz, or 3.5 GHz band. It may be understood that the first apparatus may alternatively operate on another frequency band supported by a 6G system. This is not specifically limited in embodiments of this application.

It may be understood that the first apparatus may operate in an RRC active state, an RRC inactive state, an RRC idle state, or another RRC state or RRC mode defined in a 6G communication system. This is not specifically limited in embodiments of this application.

For ease of understanding, the following describes in detail a procedure of the power control method shown in FIG. 7 by using an example in which the first apparatus is an execution body.

FIG. 7 is a schematic flowchart of a power control method according to an embodiment of this application. As shown in FIG. 7, the method includes the following steps.

S701: A first apparatus generates a data signal that has undergone clipping processing.

S702: The first apparatus determines a power offset, where the power offset is for determining a transmit power ratio between the data signal and a first channel, and the first channel is a channel that carries the data signal.

S703: The first apparatus determines a target transmit power of the first channel based on the power offset.

The following separately describes the foregoing steps S701 to S703 in detail.

For step S701:
It may be understood that the data signal may be a multi-carrier superimposed signal, for example, a signal on which DFT-s-OFDM processing is performed, or a signal on which CP-OFDM processing is performed. If the first apparatus is a terminal apparatus, the data signal may be an uplink data signal. If the first apparatus is an access network apparatus, the data signal may be a downlink data signal. It should be understood that the downlink data signal in this embodiment of this application may be a signal on which DFT-s-OFDM processing is performed.

It should be understood that the clipping processing may be the foregoing "floor clipping" processing, for example, modulus value amplification processing expressed by the formula (4). Certainly, the clipping processing in this embodiment of this application may alternatively be ceiling clipping, or the clipping processing may include floor clipping and ceiling clipping. The ceiling clipping may be performing clipping on a part of waveform with a high amplitude, that is, performing a modulus value reduction operation on a modulation symbol with a high modulus value. It may be understood that, after the ceiling clipping processing is performed, a modulus value corresponding to a modulation symbol carried in the data signal is proportionally amplified. Consequently, an offset exists between a coordinate point (or referred to as a constellation point) corresponding to the modulation symbol in a constellation diagram and an actual constellation point corresponding to the modulation symbol, increasing a probability of misjudgment when a receiver side demodulates the signal.

It should be further understood that the clipping processing corresponding to the formula (4) is merely an example. Alternatively, the clipping processing may be superimposing another signal in frequency domain and/or time domain before resource mapping is performed for the modulation symbol, or superimposing another signal in frequency domain and/or time domain after resource mapping is completed for the modulation symbol. The following lists several examples of clipping processing.

For example, the clipping processing may be placing an interference signal at a location that is orthogonal to an original signal (that is, a data signal before the clipping processing). For example, the original signal is a single-carrier-offset QAM (offset QAM, OQAM) signal. It is assumed that K complex QAM symbols are separated into K real parts and K imaginary parts, to generate an OQAM symbol sequence with a length of 2K. In this case, each OQAM symbol may be represented as *a + i · b,* that is, the OQAM signal is arranged in a "real, imaginary, real, imaginary" pattern. The clipping processing may involve setting the interference signal to be arranged in an "imaginary, real, imaginary, real" pattern. In other words, each interference symbol may be represented as *i · a + b.* In this way, the interference signal can be orthogonal to the original signal.

For another example, the original signal is oversampled, and a specific corresponding sampling sequence is [QAM symbol, 0, QAM symbol, 0, ...]. An interference symbol corresponding to the interference signal is arranged on the element "0" in the sampling sequence, to obtain a sequence [QAM symbol, interference symbol, QAM symbol, interference symbol, ...], so that the interference signal is orthogonal to the original signal.

It may be understood that, in the foregoing examples, the interference signal is orthogonal to the original signal in time domain, and the interference signal may also be orthogonal to the original signal in frequency domain. For example, if the original signal is an OQAM signal, after DFT is performed on the original signal, a frequency domain signal is obtained. If an interference signal added to the frequency domain signal satisfies conjugate anti-symmetry, orthogonality between the interference signal and the original signal can be achieved. The conjugate anti-symmetry may be $a \left(n+\frac{N}{4}\right) = - b * \left(\frac{N}{4}-n\right)$ if n<N/4, and may be $\left(n+\frac{3 N}{4}\right) = - b * \left(\frac{3 N}{4}-n\right)$ if n>3N/4. a is an interference signal added at a location n (that is, a frequency domain unit n), b is an interference signal added at a symmetric location, and N is a total number of frequency domain units occupied by the original signal.

For another example, if the original signal is an QAM signal, after DFT is performed on the original signal, a frequency domain signal is obtained. After 2-fold replication is performed on the frequency domain signal, a replicated signal is obtained as R = [r(N/2+1:N), r(1:N), r(1:N/2)]. If an interference signal added to the replicated signal satisfies anti-symmetry, orthogonality between the interference signal and the original signal can be achieved. It should be understood that introducing the interference signal in the clipping processing is not limited to the foregoing several manners, and may be implemented in another manner, such as multiplying by a filter in frequency domain or being convolved with a filter in time domain. This is not specifically limited in this embodiment of this application.

It may be understood that the constellation point corresponding to the modulation symbol carried in the data signal that has undergone the clipping processing may shift in a direction towards an origin, that is, an actual transmit power of the data signal reduces, for example, a data signal on which floor clipping processing is performed (for details, refer to FIG. 5). Alternatively, the constellation point corresponding to the modulation symbol carried in the data signal that has undergone the clipping processing may shift in a direction away from an origin, that is, an actual transmit power of the data signal increases, for example, a data signal on which ceiling clipping processing is performed.

It may be further understood that, a clipping threshold in the foregoing clipping processing may be a clipping threshold determined by the first apparatus based on a measurement result or a sensing performance requirement, or the clipping threshold is indicated. This is not specifically limited in this embodiment of this application.

It should be understood that, for a specific implementation of generating, by the first apparatus, the data signal that has undergone the clipping processing, refer to the foregoing "floor clipping". Details are not described herein again.

For step S702 and step S703:
It may be understood that, because the data signal is a data signal that has undergone clipping processing, a transmit power of the data signal is different from an allocated or configured transmit power, that is, the transmit power of the data signal is different from a transmit power of the first channel that carries the data signal. For example, when the clipping processing is the foregoing floor clipping processing, the transmit power of the data signal is less than the transmit power of the first channel. For another example, when the clipping processing is ceiling clipping processing, the transmit power of the data signal may be greater than the transmit power of the first channel.

It should be understood that in this embodiment of this application, if the first apparatus is a terminal apparatus, the first channel may be an uplink channel, for example, a PUSCH, or another uplink channel (for example, a physical uplink control channel) carrying a modulation symbol; if the first apparatus is an access network apparatus, the first channel may be a downlink channel, for example, a PDSCH, or another downlink channel (for example, a physical downlink control channel) carrying a modulation symbol. This is not specifically limited in this embodiment of this application.

It may be understood that, in this embodiment of this application, the power offset may be preconfigured, determined by the first apparatus, indicated by a network side, or negotiated by the first apparatus and a network in advance. This is not specifically limited in this embodiment of this application.

It should be understood that there may be two solutions depending on whether the power offset directly represents a power relationship between the data signal and a reference signal associated with the first channel. For ease of understanding, the following describes the power offset and step S703 by using a solution 1 and a solution 2 separately.

### Solution 1:

In a possible implementation, the power offset is a transmit power ratio between the data signal and the reference signal associated with the first channel; the power offset is an energy per resource element EPRE ratio between the data signal and the reference signal; or the power offset is a ratio between the transmit power ratio and a preconfigured transmit power ratio, where the preconfigured transmit power ratio is an EPRE ratio between the first channel and the reference signal. In other words, the power offset may be the transmit power ratio between the data signal and the reference signal, may be the corresponding EPRE ratio between the data signal and the reference signal, or may be the ratio between the preconfigured transmit power ratio and the transmit power ratio between the data signal and the reference signal, so that the first apparatus can flexibly determine the target transmit power based on different power offsets, thereby being applicable to different scenarios.

In a possible implementation, the target transmit power is determined based on the power offset and a transmit power of the reference signal. For example, that the first apparatus determines the target transmit power of the first channel based on the power offset (step S703) includes: The first apparatus determines the target transmit power of the first channel based on the power offset and the transmit power of the reference signal associated with the first channel. In other words, when determining the transmit power of the reference signal, the first apparatus may determine the target transmit power of the first channel based on the transmit power of the reference signal and the power offset. This is easy to implement.

For example, if the first channel is a PDSCH, the first apparatus (namely, the access network apparatus) may determine the target transmit power of the first channel based on EPRE (or the transmit power of the reference signal) of the reference signal and the power offset. When the power offset is the transmit power ratio between the data signal and the reference signal, if the power offset is a linear value, Target transmit power = Transmit Power of Reference Signal × Power Offset; or if the power offset is a logarithmic value, Target Transmit Power = Transmit Power of Reference Signal + Power Offset. When the power offset is the ratio between the transmit power ratio and the preconfigured transmit power ratio, the power offset actually represents the transmit power ratio between the data signal and the first channel. If the power offset is a linear value, Target Transmit Power = Transmit Power of Reference Signal × (Preconfigured Transmit Power Ratio × Power Offset); or if the power offset is a logarithmic value, Target Transmit Power = Transmit Power of Reference Signal × (Reconfigured Transmit Power Ratio + Power Offset).

It may be understood that the foregoing manner of determining the target transmit power is merely an example, and the target transmit power may be alternatively determined based on the power offset and the transmit power of the reference signal in another manner. This is not specifically limited in this embodiment of this application.

In a possible implementation, the reference signal includes a DMRS and/or a PTRS. In other words, the first apparatus may determine the target transmit power of the first channel based on the power offset and a transmit power of the DMRS and/or the PTRS, so that flexibility of determining the target transmit power by the first apparatus can be further improved. For example, when the first channel carries the DMRS but does not carry the PTRS, the first apparatus may determine the target transmit power of the first channel based on the power offset and the transmit power of the DMRS. For another example, when high frequency transmission is performed and the first channel carries the DMRS and the PTRS, the first apparatus may determine the target transmit power of the first channel preferentially based on the power offset and the transmit power of the PTRS. For another example, when the first apparatus is a high-speed moving terminal apparatus, and the first channel carries the DMRS and the PTRS, the first apparatus may determine the target transmit power of the first channel preferentially based on the power offset and the transmit power of the DMRS.

The following further describes the power offset in the foregoing solution 1.

It may be understood that, as shown in the foregoing Table 2 to Table 5, a transmit power ratio (for example, Transmit Power of First Channel/Transmit Power of Reference Signal) between the first channel and the reference signal is preconfigured in a protocol (that is, the preconfigured transmit power ratio). Therefore, the transmit power ratio between the data signal and the first channel may be determined based on the foregoing Table 2 to Table 5 and the power offset.

The following uses an example in which the reference signal is a DMRS for description.

It may be understood that a transmit power ratio between the first channel and the DMRS is equal to an EPRE ratio between the first channel and the DMRS.

When the power offset is a transmit power ratio between the data signal and the DMRS, according to the related descriptions of Table 2, when a number of DMRS CDM groups without data is 1, the transmit power of the first channel is the same as the transmit power of the DMRS (that is, the preconfigured transmit power ratio is 1). Therefore, the transmit power of the first channel may be represented by the transmit power of the DMRS. In other words, the transmit power ratio between the data signal and the first channel may be equal to the transmit power ratio between the data signal and the DMRS, that is, the power offset is equal to the transmit power ratio between the data signal and the DMRS.

It should be understood that, when the number of DMRS CDM groups without data is greater than 1, the transmit power of the first channel is different from the preconfigured transmit power of the DMRS, but a ratio between the transmit power of the first channel and the transmit power of the DMRS is an EPRE ratio specified in TS 38.214 (for details, refer to Table 2). In other words, the preconfigured transmit power ratio between the first channel and the DMRS may be represented based on the EPRE ratio.

For example, the transmit power ratio (that is, the power offset) between the data signal and the DMRS is: Transmit Power of Data Signal/Transmit Power of DMRS = 1/4 (that is, 0.25). In the foregoing Table 2, when the number of DMRS CDM groups without data is equal to 2, the preconfigured transmit power ratio is -3 dB (that is, 0.5), to be specific, Transmit Power of DMRS/Transmit Power of First Channel = 1/2 (that is, 0.5). Therefore, it may be determined that the transmit power ratio between the data signal and the first channel is 1/8. It may be understood that the power offset may also be represented by dB. For example, the power offset may be -6 dB, and the transmit power ratio between the data signal and the first channel is -9 dB.

When the power offset is the EPRE ratio between the data signal and the reference signal, the EPRE ratio is equal to the transmit power ratio between the data signal and the DMRS. Details are not described herein again.

When the power offset is the ratio between the transmit power ratio and the preconfigured transmit power ratio, the transmit power ratio between the data signal and the first channel may also be determined based on the ratio.

Similarly, when the preconfigured transmit power ratio is Transmit Power of Reference Signal/Transmit Power of First Channel, and the transmit power ratio is Transmit Power of Data Signal/Transmit Power of Reference Signal, the power offset is a product of the transmit power ratio and the preconfigured transmit power ratio.

For example, in the foregoing Table 1, when the number of DMRS CDM groups without data is equal to 3, the preconfigured transmit power ratio is -4.77 dB, to be specific, Transmit Power of DMRS/Transmit Power of First Channel = 1/3 (that is, 0.33), and the transmit power ratio between the data signal and the DMRS is: Transmit Power of Data Signal/Transmit Power of DMRS = 1/2 (that is, 0.25). Therefore, the power offset may be a product 1/6 of the two values.

It may be understood that, if the power offset is a logarithmic value, the power offset may be a difference between or a sum of the transmit power ratio and the preconfigured transmit power ratio. Alternatively, if the power offset is a linear value, the power offset is a ratio between or a product of the transmit power ratio and the preconfigured transmit power ratio.

It should be understood that the power offset being the difference or the ratio between the transmit power ratio and the preconfigured transmit power ratio is also applicable to a case in which the number of DMRS CDM groups without data is equal to 1. In other words, the transmit power ratio between the data signal and the DMRS may include two parts: the power offset (that is, the transmit power ratio between the data signal and the first channel) and the preconfigured transmit power ratio.

It may be understood that, because the transmit power ratio between the data signal and the DMRS is equal to the EPRE ratio between the data signal and the DMRS, the power offset may be a part of the EPRE ratio between the data signal and the DMRS.

For example, as shown in Table 6, EPRE Ratio between Data Signal and DMRS = EPRE Ratio between PDSCH and DMRS + Power Offset Δ*Th.* The power offset Δ*Th* may be a logarithmic value. It may be understood that Table 6 corresponds to Table 2.

**Table 6**

| Number of DMRS CDM groups without data | DMRS configuration type 1 | DMRS configuration type 2 |
|---|---|---|
| 1 | 0 *+* Δ*Th* dB | 0 *+* Δ*Th* **dB** |
| 2 | -3 *+* Δ*Th* dB | -3 *+* Δ*Th* dB |
| 3 | - | -4.77 + Δ*Th* dB |

In a possible implementation, for each DMRS configuration type, different numbers of DMRS CDM groups without data may correspond a same power offset Δ*Th.* In other words, different DMRS configuration types and different numbers of DMRS CDM groups without data may correspond to a same power offset, thereby reducing complexity of power offset configuration.

For example, as shown in Table 7, different numbers of DMRS CDM groups without data may correspond to a same power offset (-3 dB), and different DMRS configuration types may correspond to a same power offset (-3 dB).

**Table 7**

| Number of DMRS CDM groups without data | DMRS configuration type 1 | **DMRS** configuration type 2 |
|---|---|---|
| 1 | 0 + (-3 dB) | 0 + (-3 dB) |
| 2 | -3 + (-3 dB) | -3 + (-3 dB) |
| 3 | - | -4.77 + (-3 dB) |

For another example, as shown in Table 8, different DMRS configuration types may correspond to different power offsets.

**Table 8**

| Number of DMRS CDM groups without data | DMRS configuration type 1 | DMRS configuration type 2 |
|---|---|---|
| 1 | 0 + (-3 dB) | 0 + (-4.77 dB) |
| 2 | -3 + (-3 dB) | -3 + (-4.77 dB) |
| 3 | - | -4.77 + (-4.77 dB) |

In another possible implementation, for each DMRS configuration type, different numbers of DMRS CDM groups without data may correspond different power offsets Δ*Th.* For example, as shown in Table 9, different numbers of DMRS CDM groups without data may correspond to different power offsets, and different DMRS configuration types correspond to a same power offset. It may be understood that different DMRS configuration types may alternatively correspond to different power offsets. This is not specifically limited in this embodiment of this application.

**Table 9**

| Number of DMRS CDM groups without data | DMRS configuration type 1 | DMRS configuration type 2 |
|---|---|---|
| 1 | 0 + (-3 dB) | 0 + (-3 dB) |
| 2 | -3 + (-4.77 dB) | -3 + (-4.77 dB) |
| 3 | - | -4.77 + (-6 dB) |

It should be understood that, in the foregoing related descriptions of "floor clipping", a specific value of the power offset may be related to the clipping threshold. Therefore, different clipping thresholds may correspond to different power offsets, thereby improving flexibility of configuring the power offset.

It may be understood that an EPRE ratio corresponding to a PUSCH is similar to the EPRE ratio corresponding to the PDSCH. Details are not described again.

The following uses an example in which the reference signal is a PTRS for description.

It may be understood that, in a scenario of uplink transmission with transform precoding disabled, a transmit power ratio between the first channel and the PTRS may be based on a transmit power ratio ( ${ρ}_{PTRS}^{PUSCH}$) between a PUSCH and the PTRS per layer per RE. In other words, that the power offset is the transmit power ratio between the data signal and the reference signal or the power offset is the EPRE ratio between the data signal and the reference signal may be replaced with the following: The power offset is a transmit power ratio between the data signal and the PTRS per layer per RE.

Similarly, that the power offset is the ratio between the transmit power ratio and the preconfigured transmit power ratio may be replaced with the following: The power offset is a ratio between the transmit power ratio and the preconfigured transmit power ratio per layer per RE, where the preconfigured transmit power ratio is a transmit power ratio between the first channel and the PTRS per layer per RE.

For example, when the power offset is the ratio between the transmit power ratio and the preconfigured transmit power ratio per layer per RE, in the foregoing Table 3, when the number ${n}_{layer}^{PUSCH}$ of PUSCH layers is equal to 2 and full-coherent is performed, the preconfigured transmit power ratio is 3 dB, that is, Transmit Power of First Channel/Transmit Power of PTRS = 2, and the transmit power ratio between the data signal and the DMRS is: Transmit Power of Data Signal/Transmit Power of PTRS = 1/2 (that is, 0.5). Therefore, it may be determined that the power offset is a ratio between 1/2 and 2, that is, 1/4. In other words, the transmit power ratio between the data signal and the first channel is 1/4.

It may be understood that, because the transmit power ratio between the data signal and the PTRS is equal to the transmit power ratio between the data signal and the PTRS per layer per RE, the power offset may be a part of the transmit power ratio between the data signal and the PTRS per layer per RE.

For example, as shown in Table 10, Transmit Power Ratio between Data Signal and PTRS per Layer per RE = Transmit Power Ratio between PUSCH and PTRS per Layer per RE + Power Offset Δ*Th.* The power offset Δ*Th* may be a logarithmic value. It may be understood that Table 10 corresponds to Table 3.

**Table 10**

| $UL - PTRS -$ $power /$ ${α}_{PTRS}^{PUSCH}$ | | Number of PUSCH layers (the number of PUSCH layers ${n}_{layer}^{PUSCH}$) | | | | | | |
|---|---|---|---|---|---|---|---|---|
| | 1 | 2 | | 3 | | 4 | | |
| | All cases (all cases) | Full-coherent | Partial-coherent, non-coherent, and non-codebook-based | Full-coherent | Partial-coherent, non-coherent, and non-codebook-based | Full-coherent | Partial-coherent | Non-coherent and non-codebook-based |
| 00 | 0+Δ***Th*** | 3 *+* Δ***Th*** | 3*Qₚ -* 3 *+*Δ***Th*** | 4.77 + Δ***Th*** | 3*Qₚ -* 3 + Δ***Th*** | 6 *+* Δ***Th*** | 3*Qₚ* + Δ***Th*** | 3*Qₚ* - 3 *+* Δ***Th*** |
| 01 | 0+ Δ***Th*** | 3 *+* Δ***Th*** | 3 *+* Δ***Th*** | 4.77 + Δ***Th*** | 4.77 + Δ***Th*** | 6 *+* Δ***Th*** | 6 *+* Δ***Th*** | 6 *+* Δ***Th*** |
| 10 | Reserved (reserved) | | | | | | | |
| 11 | Reserved | | | | | | | |

It should be understood that, similar to the foregoing Table 7 to Table 9, for different layers and/or transmission situations (for example, whether coherent transmission is performed, whether partial-coherent transmission is performed, or whether codebook-based transmission is performed), values of the power offset Δ*Th* may be the same or different. This is not specifically limited in this embodiment of this application.

It may be understood that, in a scenario of uplink transmission with transform precoding enabled, the transmit power ratio between the first channel and the PTRS may be determined based on a scaling factor β', that is, Scaling Factor β' = Transmit Power of PTRS/Transmit Power of First Channel. In other words, that the power offset is the ratio between the transmit power ratio and the preconfigured transmit power ratio may be replaced with the following: The power offset is a ratio between the transmit power ratio and the preconfigured scaling factor β'.

It may be understood that the power offset may be a part of the transmit power ratio between the data signal and the PTRS.

For example, as shown in Table 11, Transmit Power Ratio between Data Signal and PTRS = Transmit Power Ratio between PUSCH and PTRS (that is, the preconfigured scaling factor β') + Power Offset Δ*Th.* The power offset Δ*Th* may be a logarithmic value. It may be understood that Table 11 corresponds to Table 4.

**Table 11**

| Modulation scheme | β' |
|---|---|
| π/2-BPSK | 1 *+* Δ***h*** |
| QPSK | 1 +Δ***Th*** |
| 16-QAM | $3 / \sqrt{5} + Δ Th$ |
| 64-QAM | $7 / \sqrt{21} + Δ Th$ |
| 256-QAM | $15 / \sqrt{85} + Δ Th$ |

It should be understood that, similar to Table 7 to Table 9, for different modulation schemes and/or modulation orders, values of the power offset Δ*Th* may be the same or different. This is not specifically limited in this embodiment of this application.

It may be understood that, in a downlink transmission scenario, the transmit power ratio between the first channel and the PTRS may be determined based on an EPRE ratio *ρ_{PTRS}* between the PTRS and the PDSCH per layer per RE. In other words, that the power offset is the transmit power ratio between the data signal and the reference signal or the power offset is the EPRE ratio between the data signal and the reference signal may be replaced with the following: The power offset is an EPRE ratio between the data signal and the PTRS per layer per RE.

Similarly, that the power offset is the ratio between the transmit power ratio and the preconfigured transmit power ratio may be replaced with the following: The power offset is a ratio between the EPRE ratio and the preconfigured transmit power ratio per layer per RE, where the preconfigured transmit power ratio is an EPRE ratio between the first channel and the PTRS per layer per RE.

For example, when the power offset is the ratio between the EPRE ratio and the preconfigured transmit power ratio per layer per RE, in the foregoing Table 5, when the number of PDSCH layers is equal to 2, the preconfigured transmit power ratio is 3 dB, that is, Transmit Power of First Channel/Transmit Power of PTRS = 2, and the transmit power ratio between the data signal and the DMRS is: Transmit Power of Data Signal/Transmit Power of PTRS = 1/2 (that is, 0.5). Therefore, it may be determined that the power offset is a ratio between 1/2 and 2, that is, 1/4. In other words, the transmit power ratio between the data signal and the first channel is 1/4.

It may be understood that, because the transmit power ratio between the data signal and the PTRS is equal to the EPRE ratio between the data signal and the PTRS per layer per RE, the power offset may be a part of the EPRE ratio between the data signal and the DMRS.

For example, as shown in Table 12, EPRE Ratio between Data Signal and PTRS per Layer per RE = EPRE Ratio between PDSCH and PTRS per Layer per RE + Power Offset Δ*Th.* The power offset Δ*Th* may be a logarithmic value. It may be understood that Table 12 corresponds to Table 5.

**Table 12**

| *epre-Ratio* | Number of PDSCH layers with a DMRS associated with a PTRS port (the number of PDSCH layers with DM-RS associated to the PTRS port) | | | | | |
|---|---|---|---|---|---|---|
| | 1 | 2 | 3 | 4 | 5 | 6 |
| 0 | 0 + Δ*Th* | 3 *+* Δ*Th* | 4.77 + Δ*Th* | 6 *+* Δ*Th* | 7 + Δ*Th* | 7.78 + Δ*Th* |
| 1 | 0 *+* Δ*Th* | 0 + Δ*Th* | 0 + Δ*Th* | 0 *+* Δ*Th* | 0 *+* Δ*Th* | 0 *+* Δ*Th* |
| 2 | Reserved | | | | | |
| 3 | Reserved | | | | | |

It should be understood that, similar to Table 7 to Table 9, for different PDSCH layers, values of the power offset Δ*Th* may be the same or different. This is not specifically limited in this embodiment of this application.

It may be understood that, based on Table 6 to Table 12, the first apparatus may determine a power difference between the reference signal and the data signal based on the power offset and a transmit power ratio preconfigured in a protocol. In this way, when the transmit power of the reference signal is determined, the first apparatus may determine, based on the transmit power of the reference signal and the power difference, a power compensation value corresponding to the data signal, to compensate for interference introduced by the clipping processing. In this way, the first apparatus may determine the target transmit power of the first channel based on the power compensation value.

It may be further understood that, for a second apparatus that receives the data signal, the second apparatus may determine the transmit power ratio between the data signal and the reference signal according to Table 6 to Table 12, so that when the second apparatus demodulates the data signal, the second apparatus can determine an amplitude of the data signal based on the transmit power ratio between the data signal and the reference signal. For uplink transmission, the first apparatus may be a terminal apparatus, and the second apparatus may be the access network apparatus in FIG. 6, or a module or a unit (for example, a chip, a chip system, a chip circuit, or a circuit of the access network apparatus) of the access network apparatus. For downlink transmission, the first apparatus may be an access network apparatus, and the second apparatus may be the terminal apparatus in FIG. 6, or a module or a unit (for example, a chip, a chip system, a chip circuit, or a circuit of the terminal apparatus) of the terminal apparatus.

### Solution 2:

In a possible implementation, the power offset is the transmit power ratio between the data signal and the first channel; the power offset is a ratio between an actual amplitude of a modulation symbol and an amplitude of a constellation point corresponding to the modulation symbol, where the modulation symbol is a modulation symbol carried in the data signal; or the power offset is a difference between a complex value corresponding to the modulation symbol and a complex value of the constellation point corresponding to the modulation symbol. For example, according to the related example in the foregoing "floor clipping", the transmit power of the first channel is 10 power units. After floor clipping is performed on the data signal, the transmit power ratio between the data signal and the first channel is 7/10, that is, the power offset may be 7/10. In addition, the power offset may be less than or equal to 1, or may be greater than 1. For example, when the clipping processing is the foregoing "floor clipping", the actual transmit power of the data signal reduces, and a value range of the power offset is (0, 1). For another example, in a case of ceiling clipping, the actual transmit power of the data signal may increase, and a value of the power offset may be greater than 1. Further, a value corresponding to the power offset proportion coefficient may be a quantized value, for example, a quantized value corresponding to 7/10 is 0.33.

It may be understood that the data signal is associated with a modulation scheme of the first channel. For example, when the first apparatus is a terminal apparatus, a network side may configure a modulation scheme of the first channel for the first apparatus, so that the first apparatus can perform adjustment and clipping processing on data by using the modulation scheme, to generate the data signal.

In other words, the power offset may be the transmit power ratio between the data signal and the first channel, or may be an amplitude ratio or a complex value difference between the modulation symbol carried in the data signal and the constellation point corresponding to the modulation symbol. Therefore, the first apparatus may flexibly determine the power offset, thereby being applicable to different scenarios.

For example, in an uplink transmission scenario, the power offset is defined as the transmit power ratio between the data signal and the first channel, so that the target transmit power of the first channel can be determined based on a power control parameter of the first channel, thereby implementing power control on the first channel. For another example, the power offset is defined as the amplitude ratio or the complex value difference between the modulation symbol carried in the data signal and the constellation point corresponding to the modulation symbol, so that the target transmit power of the first channel can be determined based on an MCS scheduled by using DCI, thereby implementing power control on the first channel.

It may be understood that, alternatively, the power offset may be a constellation vector between a constellation point corresponding to the modulation symbol before the clipping processing and a constellation point corresponding to the modulation symbol after the clipping processing. Alternatively, the power offset may be a Euclidean distance between a constellation point corresponding to the modulation symbol before the clipping processing and a constellation point corresponding to the modulation symbol after the clipping processing. Alternatively, the power offset may be a ratio between a Euclidean distance, relative to an origin in the constellation diagram, of the modulation symbol before the clipping processing and an actual Euclidean distance corresponding to the modulation symbol after the clipping processing.

It should be understood that, in downlink transmission, power control of the first apparatus is implemented based on EPRE of the reference signal. Therefore, the first apparatus may determine the transmit power of the first channel based on the EPRE of the reference signal and the preconfigured transmit power ratio in the foregoing solution 1, and adjust the transmit power of the first channel based on the power offset in the solution 2, to obtain the target transmit power of the first channel.

It may be understood that, in uplink transmission, the first apparatus may determine the target transmit power of the first channel based on the power control parameter of the first channel and the power offset.

It should be understood that, when the target transmit power of the first channel is determined based on the power control parameter of the first channel and the power offset, the power offset may be indicated by a second apparatus. For example, the first apparatus is a terminal apparatus, and the second apparatus is an access network apparatus.

In a possible implementation, the target transmit power is determined based on the power offset and the power control parameter of the first channel. The power control parameter of the first channel includes at least one of the following: a maximum transmit power of the terminal apparatus, an open-loop power control parameter, a closed-loop power control parameter, or an MCS. The open-loop power control parameter is for determining an open-loop power of the first channel. The closed-loop power control parameter is for determining a closed-loop power adjustment value of the first channel. The MCS is for determining an MCS power adjustment amount. For example, that the first apparatus determines the target transmit power of the first channel based on the power offset (that is, step S703) includes: The first apparatus determines the target transmit power of the first channel based on the power offset and the power control parameter of the first channel.

In other words, the first apparatus may determine the target transmit power of the first channel based on an uplink power control parameter and the power offset. In this case, an uplink power control manner of a system is slightly changed, and has good compatibility. Therefore, implementation complexity can be reduced.

It may be understood that, for the power control parameter of the first channel, refer to the foregoing formula (2). For example, the open-loop power control parameter may include an index *j* of a parameter set configured by using higher layer signaling and a path loss reference signal resource index *q_{d}.* The closed-loop power control parameter may include an index *l* of a closed-loop power control state.

In a possible implementation, the transmit power ratio between the data signal and the first channel includes any one of the following: a ratio between the transmit power of the data signal and the open-loop power of the first channel; a ratio between the transmit power of the data signal and the closed-loop power adjustment value of the first channel; a ratio between the transmit power of the data signal and the MCS power adjustment amount of the first channel; or a ratio between the transmit power of the data signal and the maximum transmit power of the terminal apparatus corresponding to the first channel. In other words, the transmit power ratio between the data signal and the first channel may include a plurality of power adjustment amounts corresponding to uplink power control, so that the first apparatus can adjust the uplink power control in various manners, thereby supporting the first apparatus in flexibly determining the target transmit power of the first channel.

The following separately describes in detail the foregoing uplink power control adjustment manner based on manners 1 to 4.

### Manner 1: Adjust the open-loop power

In a possible implementation, the open-loop power includes a target receive power and/or a path loss compensation power. The ratio between the transmit power of the data signal and the open-loop power of the first channel includes a ratio between the transmit power of the data signal and the target receive power, or a ratio between the transmit power of the data signal and the path loss compensation power. It may be understood that the power offset may include: the ratio between the transmit power of the data signal and the target receive power, and/or the ratio between the transmit power of the data signal and the path loss compensation power. Therefore, the power offset is for adjusting the open-loop power. Further, the open-loop power is configured by the network side, and may remain valid throughout an RRC connection. In other words, when the power offset is the ratio between the transmit power of the data signal and the open-loop power, the power offset may remain valid throughout an RRC connection, so that the first apparatus determines the target transmit power of the first channel based on the power offset throughout the RRC connection, thereby reducing network overheads.

In a possible implementation, the target receive power includes a common target receive power and a dedicated target receive power of the terminal apparatus, and the ratio between the transmit power of the data signal and the target receive power includes: a ratio between the transmit power of the data signal and the common target receive power, or a ratio between the transmit power of the data signal and the dedicated target receive power. In other words, when the power offset is the ratio between the transmit power of the data signal and the common target receive power, the power offset may correspond to a plurality of terminal apparatuses in a cell, thereby further reducing network overheads. When the power offset is the ratio between the transmit power of the data signal and the dedicated target receive power of the terminal apparatus, the power offset may be configured for a specific terminal apparatus in a cell, thereby improving flexibility of configuring the power offset.

In a possible implementation, the target transmit power is determined based on an adjusted open-loop power and at least one of the following: the closed-loop power adjustment value, the MCS power adjustment amount, and the maximum transmit power of the terminal apparatus, and the adjusted open-loop power is obtained by adjusting the open-loop power based on the power offset. In other words, the first apparatus may determine the target transmit power of the first channel by adjusting an open-loop power in the uplink power control, to further reduce changes to the uplink power control and improve compatibility.

For example, that the first apparatus determines the target transmit power of the first channel based on the power offset and the power control parameter of the first channel may include: The first apparatus determines the adjusted open-loop power based on the power offset and the open-loop power; and the first apparatus determines the target transmit power based on the adjusted open-loop power and at least one of the following: the closed-loop power adjustment value, the MCS power adjustment amount, and the maximum transmit power of the terminal apparatus.

For example, the first channel is a PUSCH. The adjusted open-loop power *P'_{b,f,c}*(*f, q_{d}*) may be determined by using a formula (5). $P {′}_{b , f , c} \left(j, {q}_{d}\right) = {P}_{O _ PUSCH , b , f , c} \left(j\right) + {α}_{b , f , c} \left(j\right) ⋅ {PL}_{b , f , c} \left({q}_{d}\right) + Δ Th$

*P'_{b,f,c}*(*j*, *q_{d}*) represents the adjusted open-loop power, *P*_{O_PUSCH,*b*,*f*,*c*}(*j*) represents the target receive power, *α_{b,f,c}*(*j*) · *PL_{b,f,c}*(*q_{d}*) represents the path loss compensation power, and Δ*Th* represents the power offset. For details of *P*_{O_PUSCH,*b*,*f*,c}(*j*), *α_{b,f,c}*(*j*)*,* and *PL_{b,f,c}*(*q_{d}*), refer to related descriptions of the foregoing formula (2). Details are not described herein again.

It may be understood that, if the power offset is the transmit power ratio between the data signal and the first channel, for example, Power Offset = Transmit Power of First Channel/Transmit Power of Data Signal = 4, a logarithmic value corresponding to the power offset is 6 dB. It may be understood that, when the power offset is a linear value, the formula (5) may be transformed into *P'_{b,f,c}*(*j*, *q_{d}*) = (*P*_{OPUSCH,*b*,*f*,*c*}(*j*) + *α_{b,f,c}*(*j*) *· PL_{b,f,c}*(*q_{d}*)) * Δ*Th.*

When Power Offset = Transmit Power of Data Signal/Transmit Power of First Channel = 1/4 (that is, -6 dB), if the power offset is a linear value, Δ*Th* may be represented as a reciprocal of the power offset; or if the power offset is a logarithmic value, Δ*Th* may be represented as a negative number of the power offset (-6 dB).

It should be understood that, in the foregoing example, the transmit power of the data signal is less than the transmit power of the first channel, and therefore, the adjusted open-loop power is greater than an open-loop power before the adjustment. In actual implementation, the transmit power of the data signal that has undergone the clipping processing may also be greater than the transmit power of the first channel, and therefore, the adjusted open-loop power is less than the open-loop power before the adjustment.

For example, if Power Offset = Transmit Power of First Channel/Transmit Power of Data Signal = 4, a logarithmic value corresponding to the power offset is 6 dB, that is, *P'_{b,f,c}*(*j*, *q_{d}*) = *P*_{O_PUSCH,*b*,*f*,*c*}(*j*) *+ α_{b,f,c}*(*j*) · *PL_{b,f,c}*(*q_{d}*) - 6 dB.

It may be understood that the ratio between the transmit power of the data signal and the target receive power includes the ratio between the transmit power of the data signal and the common target receive power or the ratio between the transmit power of the data signal and the dedicated target receive power. The adjusted open-loop power includes an adjusted target receive power and the path loss compensation power, that is, *P*'_{O_PUSCH,*b*,*f*,*c*}(*j*) = *P*'_{O_PUSCH,*b*,*f*,*c*}(*j*) *+ α_{b,f,c}*(*j*) · *PL_{b,f,c}*(*q_{d}*) , where *P*'_{O_PUSCH,*b*,*f*,*c*}(*j*) is the adjusted target receive power, and *P*'_{O_PUSCH,*b*,*f*,*c*}(*j*) may be determined by using a formula (6).
*P*'_{O_PUSCH,*b*,*f*,*c*}(*j*) = *P*_{O_NOMINAL_PUSCH,*f*,*c*}(*j*) *+ P*_{O_UE_PUSCH,*b*,*f*,*c*}(*j*) + Δ*Th* Formula (6)

*P*_{O_NOMINAL_PUSCH,*f*,*c*}(*j*) represents the common target receive power, *P*_{O_UE_PUSCH,*b*,*f*,*c*}(*j*) represents the dedicated target receive power of the terminal apparatus, and Δ*Th* represents the power offset.

It should be understood that, *b, f,* and c carried in the parameters in the formula (5), the formula (6), and the formula (2) indicate that the parameters are parameter values corresponding to an active BWP *b* of a carrier *f* of a serving cell *c.* This is uniformly described herein, and details are not described below.

It may be understood that, when the second apparatus does not perform closed-loop power adjustment on the first apparatus, *Kₛ* = 0 (that is, a function of power adjustment based on an MCS is disabled for a higher-layer parameter configuration), and the maximum transmit power of the terminal apparatus may be omitted, the first apparatus may determine the target transmit power of the first channel based on the adjusted open-loop power. A case in which the maximum transmit power of the terminal apparatus may be omitted may include: A power class of the terminal apparatus is high, power reduction is not expected, the maximum transmit power of the terminal apparatus is greater than the adjusted open-loop power, or the adjusted open-loop power is reduced. This is not specifically limited in this embodiment of this application.

For example, the first channel is a PUSCH. The target transmit power of the first channel is $P {′}_{PUSCH , b , f , c} \left(i, j, {q}_{d}, l\right) = P {′}_{b , f , c} \left(j, {q}_{d}\right) + 10 {log}_{10} \left({2}^{μ}⋅{M}_{RB , b , f , c}^{PUSCH}\left(i\right)\right)$. *µ* represents a subcarrier spacing of the first channel, ${M}_{RB , b , f , c}^{PUSCH} \left(i\right)$ represents a number of RBs occupied by the first channel, *P'_{b,f,c}*(*j, q_{d}*) represents the adjusted open-loop power, and *P'_{b,f,c}*(*j, q_{d}*) may be determined according to the formula (5) or the formula (6).

It may be further understood that, when the second apparatus performs closed-loop power adjustment on the first apparatus, *Kₛ* = 0, and the maximum transmit power of the terminal apparatus may be omitted, the first apparatus may determine the target transmit power of the first channel based on the adjusted open-loop power and the closed-loop power adjustment value.

Alternatively, when the second apparatus does not perform closed-loop power adjustment on the first apparatus, *Kₛ* is not equal to 0, and the maximum transmit power of the terminal apparatus may be omitted, the first apparatus may determine the target transmit power of the first channel based on the adjusted open-loop power and the MCS power adjustment amount.

Alternatively, when the second apparatus does not perform closed-loop power adjustment on the first apparatus and *Kₛ* = 0, the first apparatus may determine the target transmit power of the first channel based on the adjusted open-loop power and the maximum transmit power of the terminal apparatus. For example, the first channel is a PUSCH. The target transmit power *P'_{PUSCH,b,f,c}*(*i, j, q_{d}, l*) of the first channel may be determined according to a formula (7). $P {′}_{PUSCH , b , f , c} \left(i, j, {q}_{d}, l\right) = min \left\{\begin{matrix}{P}_{CMAX , f , c} \left(i\right) \\ P {′}_{b , f , c} \left(j, {q}_{d}\right) + 10 {log}_{10} \left({2}^{μ}⋅{M}_{Rb , b , f , c}^{PUSCH}\left(i\right)\right)\end{matrix}\right\} \left[dBm\right]$

For parameters in the formula (7), refer to related descriptions of the formula (5), the formula (6), and the formula (2). Details are not described again.

Similarly, in different cases, the first apparatus may determine the target transmit power of the first channel based on the adjusted open-loop power and at least two of the following: the closed-loop power adjustment value, the MCS power adjustment amount, and the maximum transmit power of the terminal apparatus.

For example, the first channel is a PUSCH. The target transmit power *P'_{PUSCH,b,f,c}*(*i, j, q_{d}, l*) of the first channel may be determined according to a formula (8). $P {′}_{PUSCH , b , f , c} \left(i, j, {q}_{d}, l\right) = min \left\{\begin{matrix}{P}_{CMAX , f , c} \left(i\right) \\ P {′}_{b , f , c} \left(j, {q}_{d}\right) + 10 {log}_{10} \left({2}^{μ}⋅{M}_{RB , b , f , c}^{PUSCH}\left(i\right)\right) \\ + {Δ}_{TF , b , f , c} \left(i\right) + {f}_{b , f , c} \left(i, l\right)\end{matrix}\right\} \left[dBm\right]$

For parameters in the formula (8), refer to related descriptions of the formula (5), the formula (6), and the formula (2). Details are not described again.

It may be understood that the foregoing formulas are merely examples. In some scenarios, for example, in a carrier aggregation (carrier aggregation, CA) scenario and a dual connectivity (dual connectivity, DC) scenario, *b, f,* and c carried in the parameters in the foregoing formulas may be changed or omitted. This is not specifically limited in this embodiment of this application.

### Manner 2: Adjust the closed-loop power adjustment value

It may be understood that, when the transmit power ratio between the data signal and the first channel is the ratio between the transmit power of the data signal and the closed-loop power adjustment value of the first channel, the power offset may be the ratio between the transmit power of the data signal and the closed-loop power adjustment value of the first channel. Therefore, the power offset is for adjusting the closed-loop power adjustment value of the first channel. Further, the closed-loop power adjustment value is configured by the network side by using transmit power control (transmit power control, TPC) signaling. In other words, when the power offset is the ratio between the transmit power of the data signal and the closed-loop power adjustment value, the power offset may be for quickly and dynamically adjusting the transmit power of the first channel, to be applicable to a scenario in which a channel rapidly changes, cell interference is adapted, and a service rapidly changes.

In a possible implementation, the target transmit power is determined based on an adjusted closed-loop power adjustment value and at least one of the following: the open-loop power, the MCS power adjustment amount, and the maximum transmit power of the terminal apparatus, and the adjusted closed-loop power adjustment value is obtained by adjusting the closed-loop power adjustment value based on the power offset. In other words, the first apparatus may determine the target transmit power of the first channel by adjusting the closed-loop power adjustment value in the uplink power control, to further reduce changes to the uplink power control and improve compatibility.

For example, that the first apparatus determines the target transmit power of the first channel based on the power offset and the power control parameter of the first channel may include: The first apparatus determines the adjusted closed-loop power adjustment value based on the power offset and the closed-loop power adjustment value; and the first apparatus determines the target transmit power based on the adjusted closed-loop power adjustment value. Alternatively, the first apparatus determines the target transmit power based on the adjusted closed-loop power adjustment value and at least one of the following: the open-loop power, the MCS power adjustment amount, and the maximum transmit power of the terminal apparatus.

For example, the first channel is a PUSCH. The adjusted closed-loop power adjustment value may be determined by using a formula (9). $f {′}_{b , f , c} \left(i, l\right) = {f}_{b , f , c} \left(i, l\right) + Δ Th$

*f'_{b,f,c}*(*i, l*) represents the adjusted closed-loop power adjustment value, *f_{b,f,c}*(*i, l*) represents the closed-loop power adjustment value, and Δ*Th* represents the power offset. It may be understood that Δ*Th* in the formula (9) is similar to Δ*Th* in the formula (5). For example, if Power Offset = Transmit Power of First Channel/Transmit Power of Data Signal = 4, a logarithmic value corresponding to the power offset is 6 dB. It may be understood that, when the power offset is a linear value, the formula (9) may be transformed into *f'*_{*b,f*,*c*}(*i, l*) *=* (*f_{b,f,c}*(*i, l*)) *** Δ*Th.*

It may be understood that, when *Kₛ* = 0 and the maximum transmit power of the terminal apparatus may be omitted, the first apparatus may determine the target transmit power of the first channel based on the adjusted closed-loop power adjustment value and the open-loop power; or when *Kₛ* is not equal to 0 and the maximum transmit power of the terminal apparatus may be omitted, the first apparatus may determine the target transmit power of the first channel based on the adjusted closed-loop power adjustment value, the open-loop power, and the MCS power adjustment amount. Alternatively, the first apparatus may determine the target transmit power of the first channel based on the adjusted closed-loop power adjustment value, the open-loop power, the MCS power adjustment amount, and the maximum transmit power of the terminal apparatus.

For example, the first channel is a PUSCH. The target transmit power *P'_{PUSCH,b,f,c}*(*i, j, q_{d}, l*) of the first channel may be determined according to a formula (10). $P {′}_{PUSCH , b , f , c} \left(i, j, {q}_{d}, l\right) = min \left\{\begin{matrix}{P}_{CMAX , f , c} \left(i\right) \\ {P}_{O_PUSCH , b , f , c} \left(j\right) + 10 {log}_{10} \left({2}^{μ}⋅{M}_{RB , b , f , c}^{PUSCH}\left(i\right)\right) + \\ {α}_{b , f , c} \left(j\right) ⋅ {PL}_{b , f , c} \left({q}_{d}\right) + {Δ}_{TF , b , f , c} \left(i\right) + f {′}_{b , f , c} \left(i, l\right)\end{matrix}\right\} \left[dBm\right]$

For *f'_{b,f,c}*(*i, l*) in the formula (10), refer to the foregoing formula (9). For other parameters in the formula (10), refer to related descriptions of the foregoing formula (2). Details are not described again.

It should be understood that the foregoing formula (9) and formula (10) are merely examples, and the adjusted closed-loop power adjustment value and the target transmit power may alternatively be determined in another manner. This is not specifically limited in this embodiment of this application.

### Manner 3: Adjust the MCS power adjustment amount

In a possible implementation, the ratio between the transmit power of the data signal and the MCS power adjustment amount is for adjusting a BPRE. It may be understood that a function of the MCS power adjustment amount is similar to that of the closed-loop power adjustment value, and a difference lies in that: The second apparatus dynamically schedules an MCS of the first apparatus, to change a transmit power spectral density of the first apparatus, to achieve an effect similar to fast power control. In other words, the first apparatus may adjust the BPRE based on the power offset, to quickly and dynamically adjust the transmit power of the first channel. For example, the first apparatus may send a scheduling request (scheduling request, SR) or a buffer status report (buffer state report, BSR) to the second apparatus, and the second apparatus may determine, based on the SR or the BSR from the first apparatus, an MCS and a power offset for scheduling the first apparatus, so that the first apparatus can adjust the transmit power of the first channel based on the MCS and the power offset that are for scheduling.

It may be understood that, that the ratio between the transmit power of the data signal and the MCS power adjustment amount is for adjusting the BPRE may mean that the power offset may be used as a proportion coefficient of the BPRE. For example, an adjusted BPRE' may be determined according to a formula (11). $BPRE ′ = {\sum }_{r = 0}^{C - 1} \frac{{K}_{r}}{{N}_{RE}} ⋅ Δ Th$

Δ*Th* is the power offset. For other parameters in the formula (11), refer to descriptions of related parameters in the formula (2). Details are not described herein again.

It may be understood that, because the BPRE is a sum of ratios between *Kᵣ and N_{RE},* the power offset Δ*Th* may be a linear value.

In a possible implementation, the target transmit power is determined based on an adjusted MCS power adjustment amount and at least one of the following: the open-loop power, the closed-loop power adjustment value, and the maximum transmit power of the terminal apparatus, and the adjusted MCS power adjustment amount is obtained by adjusting the MCS power adjustment amount based on the power offset. In other words, the first apparatus may determine the target transmit power of the first channel by adjusting a BPRE in the uplink power control, to further reduce changes to the uplink power control and improve compatibility.

For example, that the first apparatus determines the target transmit power of the first channel based on the power offset and the power control parameter of the first channel may include: The first apparatus determines the adjusted MCS power adjustment amount based on the power offset and the BPRE; and the first apparatus determines the target transmit power based on the MCS power adjustment amount and at least one of the following: the open-loop power, the closed-loop power adjustment value, and the maximum transmit power of the terminal apparatus.

For example, the first channel is a PUSCH. The MCS power adjustment amount may be determined by using a formula (12). $Δ {′}_{TF , b , f , c} \left(i\right) = 10 {log}_{10} \left(\left({2}^{BPRE ′}-1\right)⋅{β}_{offset}^{PUSCH}\right)$

Δ'_{TF*,b,f,c*}(*i*) represents the adjusted MCS power adjustment amount, and BPRE' is the adjusted BPRE. For BPRE', refer to related descriptions of the formula (11). For other parameters in the formula (12), refer to related descriptions of the formula (2). Details are not described herein again.

It may be understood that, when *Kₛ* is not equal to 0, the second apparatus does not perform closed-loop power adjustment on the first apparatus, and the maximum transmit power of the terminal apparatus may be omitted, the first apparatus may determine the target transmit power of the first channel based on the adjusted MCS power adjustment amount and the open-loop power. Alternatively, when *Kₛ* is not equal to 0 and the maximum transmit power of the terminal apparatus may be omitted, the first apparatus may determine the target transmit power of the first channel based on the adjusted MCS power adjustment amount, the open-loop power, and the closed-loop power adjustment value. Alternatively, the first apparatus may determine the target transmit power of the first channel based on the adjusted MCS power adjustment amount, the open-loop power, the closed-loop power adjustment value, and the maximum transmit power of the terminal apparatus.

For example, the first channel is a PUSCH. The target transmit power *P'*_{PUSCH*,b,f,c*}(*i, j, q_{d}, l*) of the first channel may be determined according to a formula (13). $P {′}_{PUSCH , b , f , c} \left(i, j, {q}_{d}, l\right) = min \left\{\begin{matrix}{P}_{CMAX , f , c} \left(i\right) \\ {P}_{O_PUSCH , b , f , c} \left(j\right) + 10 {log}_{10} \left({2}^{μ}⋅{M}_{RB , b , f , c}^{PUSCH}\left(i\right)\right) + \\ {α}_{b , f , c} \left(j\right) ⋅ {PL}_{b , f , c} \left({q}_{d}\right) + Δ {′}_{TF , b , f , c} \left(i\right) + {f}_{b , f , c} \left(i, l\right)\end{matrix}\right\} \left[dBm\right]$

For Δ'_{TF*,b,f,c*}(*i*) in the formula (13), refer to the foregoing formula (12). For other parameters in the formula (11), refer to related descriptions of the foregoing formula (2). Details are not described again.

### Manner 4: Adjust the MPR

It may be understood that, when the power offset is the ratio between the transmit power of the data signal and the maximum transmit power of the terminal apparatus, the power offset may be for adjusting the maximum transmit power of the terminal apparatus, so that the target transmit power of the first channel can be effectively determined in a scenario in which the transmit power of the first channel is reduced. For example, when the transmit power of the data signal is greater than the transmit power of the first channel, the transmit power of the first channel is reduced, so that an offset, caused by the clipping processing, of the modulation symbol carried in the data signal in the constellation diagram can be reduced. In uplink power control (refer to the formula (2)), the transmit power of the first channel can be directly and effectively reduced by reducing the maximum transmit power of the terminal apparatus compared by reducing the open-loop power, the closed-loop power adjustment value, the MCS power adjustment amount, and the like.

In a possible implementation, the ratio between the transmit power of the data signal and the maximum transmit power of the terminal apparatus includes a ratio or a difference between an MPR value and a preconfigured MPR value. In other words, when the power offset is the ratio or the difference between the MPR value and the preconfigured MPR value, the power offset may be adjusted by adjusting the maximum transmit power of the terminal apparatus based on the MPR value, leading to small changes to the uplink power control. Therefore, system compatibility is good, and the first apparatus can effectively determine the target transmit power of the first channel in a scenario in which the transmit power of the first channel is reduced.

It may be understood that the MPR value is an actual MPR value of the first apparatus. For the preconfigured MPR value, refer to the foregoing Table 1. When the MPR value and the preconfigured MPR value are logarithmic values, the power offset may be a logarithmic value, that is, the power offset is a difference between the MPR value and the preconfigured MPR value. For example, MPR Value = Preconfigured MPR Value + Δ*Th.* When the MPR value and the preconfigured MPR value are linear values, the power offset may be a linear value, that is, the power offset is the ratio between the MPR value and the preconfigured MPR value.

For example, for a relationship between the MPR value, the preconfigured MPR value, and the power offset Δ*Th,* refer to Table 13. As shown in Table 13, MPR Value = Preconfigured MPR Value + Δ*Th.* The data signal may be a signal on which DFT-s-OFDM processing is performed, that is, transform precoding enabled on the first channel; or the data signal may be a signal on which CP-OFDM processing is performed, that is, transform precoding disabled on the first channel.

**Table 13**

| Modulation scheme | | MPR value (dB) | | |
|---|---|---|---|---|
| | | Edge RB allocations | Outer RB allocations | Inner RB allocations |
| DFT-s- | π/2-BPSK | ≤ 3.5 + Δ*Th* | ≤ 0.5 + Δ*Th* | 0 +Δ*Th* |
| OFDM | QPSK | ≤ 3.5 + Δ*Th* | ≤ 1 *+* Δ*Th* | 0 + Δ*Th* |
| | 16-QAM | ≤ 3.5 +Δ*Th* | ≤ 2 + Δ*Th* | ≤ 1 *+* Δ*Th* |
| | 64-QAM | ≤ 3.5 *+* Δ*Th* | ≤ 2.5 *+* Δ*Th* | |
| | 256-QAM | ≤ 4.5 + Δ*Th* | | |
| CP-OFDM | QPSK | ≤ 3.5 + Δ*Th* | ≤ 3 *+* Δ*Th* | ≤ 1.5 + Δ*Th* |
| | 16-QAM | ≤ 3.5 *+* Δ*Th* | ≤ 3 *+* Δ*Th* | ≤ 2 + Δ*Th* |
| | 64-QAM | ≤ 3.5 + Δ*Th* | | |
| | 256-QAM | ≤ 6.5 + Δ*Th* | | |

It should be understood that Table 13 is merely an example. For different RB allocations and/or modulation schemes, values of the power offset Δ*Th* may be the same or different. This is not specifically limited in this embodiment of this application.

In a possible implementation, the target transmit power is determined based on an adjusted maximum transmit power of the terminal apparatus and at least one of the following: the open-loop power, the closed-loop power adjustment value, and the MCS power adjustment amount, and the adjusted maximum transmit power of the terminal apparatus is obtained by adjusting the maximum transmit power of the terminal apparatus based on the power offset. In other words, the first apparatus may determine the target transmit power of the first channel by adjusting the maximum transmit power of the terminal apparatus in the uplink power control based on the MPR. This can further reduce changes to the uplink power control and improve compatibility.

For example, that the first apparatus determines the target transmit power of the first channel based on the power offset and the power control parameter of the first channel may include: The first apparatus determines the adjusted maximum transmit power of the terminal apparatus based on the power offset and the maximum transmit power of the terminal apparatus; and the first apparatus determines the target transmit power based on the adjusted maximum transmit power of the terminal apparatus. Alternatively, the first apparatus determines the target transmit power based on the adjusted maximum transmit power of the terminal apparatus and at least one of the following: the open-loop power, the closed-loop power adjustment value, and the MCS power adjustment amount.

It may be understood that, in a scenario in which power reduction is performed and the transmit power of the first channel is reduced, the adjusted maximum transmit power of the terminal apparatus may be used as the target transmit power. In this way, the first apparatus may determine the target transmit power based on the adjusted maximum transmit power of the terminal apparatus.

It may be further understood that, when the second apparatus does not perform closed-loop power control on the first apparatus and *Kₛ* = 0, the first apparatus may determine the target transmit power based on the adjusted maximum transmit power of the terminal apparatus and the open-loop power. Alternatively, when the second apparatus performs closed-loop power control on the first apparatus and *Kₛ* = 0, the first apparatus may determine the target transmit power based on the adjusted maximum transmit power of the terminal apparatus, the open-loop power, and the closed-loop power adjustment value. Alternatively, when the second apparatus does not perform closed-loop power control on the first apparatus and *Kₛ* is not equal to 0, the first apparatus may determine the target transmit power based on the adjusted maximum transmit power of the terminal apparatus, the open-loop power, and the MCS power adjustment amount. Alternatively, when the second apparatus performs closed-loop power control on the first apparatus and *Kₛ* is not equal to 0, the first apparatus may determine the target transmit power based on the adjusted maximum transmit power of the terminal apparatus, the open-loop power, and the MCS power adjustment amount.

For example, the first channel is a PUSCH. The target transmit power *P'*_{PUSCH*,b,f,c*}(*i, j, q_{d}, l*) of the first channel may be determined according to a formula (14). $P {′}_{PUSCH , b , f , c} \left(i, j, {q}_{d}, l\right) = min \left\{\begin{matrix}{P}_{CMAX , f , c} \left(i\right) - MPR \\ {P}_{O_PUSCH , b , f , c} \left(j\right) + 10 {log}_{10} \left({2}^{μ}⋅{M}_{RB , b , f , c}^{PUSCH}\left(i\right)\right) + \\ {α}_{b , f , c} \left(j\right) ⋅ {PL}_{b , f , c} \left({q}_{d}\right) + Δ {′}_{TF , b , f , c} \left(i\right) + {f}_{b , f , c} \left(i, l\right)\end{matrix}\right\} \left[dBm\right]$

(*P*_{CMAX*,f,c*}(*i*) *- MPR*) in the formula (14) represents the adjusted maximum transmit power of the terminal apparatus. For the MPR value, refer to Table 13. For other parameters in the formula (14), refer to the formula (2). Details are not described again.

It should be understood that the foregoing manners 1 to 4 may be separately implemented, or at least two of the foregoing manners 1 to 4 may be mutually combined. This is not specifically limited in this embodiment of this application.

It may be understood that, in addition to the clipping threshold, the power offset may further be related to another transmission parameter corresponding to the data signal, for example, a modulation order for transmitting the data signal. The following specifically describes an association relationship between the power offset and a transmission parameter that is for transmitting the data signal.

In a possible implementation, the power offset may be associated with the transmission parameter for transmitting the data signal. The transmission parameter includes one or more of the following: an MCS for transmitting the data signal, a constellation diagram for transmitting the data signal, a modulation order for transmitting the data signal, or a clipping threshold for performing clipping processing on the data signal.

In a possible implementation, the power offset is inversely proportional to the clipping threshold.

It may be understood that, as described in the foregoing related descriptions of "floor clipping", in the floor clipping processing, a larger clipping threshold indicates a larger modulus value corresponding to an introduced interference symbol. Therefore, in the transmit power of the first channel, a larger occupation proportion of an interference signal corresponding to the interference symbol indicates a smaller actual transmit power of the data signal, that is, a smaller transmit power ratio between the data signal and the first channel indicates a smaller power offset.

It may be further understood that a smaller clipping threshold indicates a smaller modulus value corresponding to an introduced interference symbol, and therefore, an actual transmit power of the data signal is closer to the transmit power of the first channel, that is, the power offset is larger.

Further, a larger clipping threshold indicates a smaller fluctuation of a frequency domain waveform on which clipping processing is performed, and smaller impact on sensing performance.

In a possible implementation, the power offset is determined based on the clipping threshold.

It may be understood that, as described in the foregoing related descriptions of "floor clipping", in the floor clipping processing, with reference to the constellation diagram shown in FIG. 3, the modulus value corresponding to the introduced interference symbol may be determined based on the clipping threshold, an occupation proportion of a transmit power corresponding to the interference symbol in the transmit power of the first channel is determined, and a reduction proportion of the transmit power of the data signal is determined based on the occupation proportion, that is, the transmit power ratio between the data signal and the first channel, that is, the power offset.

In a possible implementation, when the modulation order is less than or equal to a first threshold, the power offset is 1. It may be understood that, if the power offset is 1, it indicates that the transmit powers of the data signal and the first channel are the same, that is, no interference symbol is introduced in a clipping processing process. It may be further understood that, if each modulus value corresponding to the modulation symbol is greater than the clipping threshold, it means that the modulus value amplification is not performed on the modulation symbol, and therefore, and no interference symbol is introduced in the clipping processing process.

Further, when the modulation order is low, frequency domain waveform amplitudes corresponding to different subcarriers in frequency domain are similar, that is, a frequency domain waveform fluctuation is small. Therefore, all subcarriers occupied by the data signal satisfy a condition in the formula (4) for the foregoing "floor clipping", that is, the modulus value |*X*(*n*)| of the modulation symbol is greater than or equal to the clipping threshold Th. In this way, the modulation symbol is not amplified.

For example, when the modulation order is 1, there are only two constellation points in the constellation diagram, and Euclidean distance values corresponding to the two constellation points are the same, that is, different modulation symbols correspond to a same modulus value, that is, no fluctuation occurs in the frequency domain waveform. For another example, when the modulation order is 3, there are only eight constellation points in the constellation diagram, a difference between Euclidean distance values corresponding to the constellation points is small, and therefore, the fluctuation in the frequency domain waveform is small.

It may be understood that, the first threshold may be 1, 2, 3, 4, or the like. This is not specifically limited in this embodiment of this application.

It may be further understood that the first apparatus may determine the first threshold based on a sensing requirement or an indication.

It should be understood that, when the modulation order is less than or equal to the first threshold, the first apparatus may set the clipping threshold to be less than or equal to a normalized proportion value corresponding to a modulation symbol with a smallest modulus value. The normalized proportion value may be a proportion value of the normalization factor, the normalized modulus value, or the normalized Euclidean distance value described in the foregoing "floor clipping".

For example, when the modulation order is 3, for 8-QAM, the modulation symbol with the smallest modulus value is a modulation symbol on an I-axis or a Q-axis. Therefore, the clipping threshold may be set to a normalized proportion value corresponding to the modulation symbol on the I-axis or the Q-axis. It may be understood that the clipping threshold may alternatively be set to a smaller normalized proportion value, for example, 0.1, 0.05, or 0.01. This is not specifically limited in embodiments of this application.

It may be understood that, for the floor clipping represented by the foregoing formula (4), the clipping threshold is inversely proportional to the power offset. To be specific, a larger clipping threshold indicates a larger transmit power occupied by an introduced interference signal, and a larger proportion of actual transmit power reduction of the data signal. In this way, the offset between the coordinate point corresponding to the modulation symbol in the constellation diagram and the constellation point actually corresponding to the modulation symbol is larger. However, at different modulation orders, tolerance degrees for the offset are different. For example, a higher modulation order indicates a lower tolerance degree for the foregoing offset, and a lower modulation order indicates a higher tolerance degree for the foregoing offset. The reason is that a data signal with a higher modulation order requires a higher signal to interference plus noise ratio (signal to interference plus noise ratio, SINR) to be normally demodulated. If the clipping threshold is excessively large, that is, a power of an interference signal is high, a large demodulation loss is caused. A data signal with a lower modulation order can be normally demodulated when an SINR is low.

In other words, a lower modulation order indicates a higher tolerance degree for interference introduced in the clipping processing. Therefore, the clipping threshold can be appropriately increased, to reduce impact on the sensing performance.

In a possible implementation, the modulation order is inversely proportional to the clipping threshold. In other words, a larger modulation order indicates a smaller clipping threshold, and a smaller modulation order indicates a larger clipping threshold. For example, when the modulation order is 6, that is, 64-QAM, the clipping threshold may be 0.2, and a modulus value of a modulation symbol whose corresponding modulus value is less than 0.2 needs to be amplified. When the modulation order is 4, that is, 16-QAM, the clipping threshold may be 0.7, and a modulus value of a modulation symbol whose corresponding modulus value is less than 0.7 needs to be amplified.

In a possible implementation, the power offset is directly proportional to the modulation order. In other words, a higher modulation order indicates a larger power offset, and a lower modulation order indicates a smaller power offset.

In a possible implementation, a target code rate (target code rate) is inversely proportional to the clipping threshold. In other words, a higher target code rate indicates a smaller clipping threshold, and a lower target code rate indicates a larger clipping threshold. It may be understood that the target code rate is similar to the modulation order. A lower target code rate indicates a higher tolerance degree for the interference introduced in the clipping processing, and a higher target code rate indicates a lower tolerance degree for the interference introduced in the clipping processing.

In a possible implementation, the power offset is directly proportional to the target code rate. In other words, a higher target code rate indicates a larger power offset, and a lower target code rate indicates a smaller power offset.

It may be understood that the MCS includes the modulation order and the target code rate, an MCS index is directly proportional to the modulation order, and the MCS index is roughly directly proportional to the target code rate. Therefore, there is also a correspondence between the MCS and the clipping threshold.

For example, the MCS is inversely proportional to the clipping threshold. A larger MCS index indicates a smaller clipping threshold, and a smaller MCS index indicates a larger clipping threshold.

In a possible implementation, the power offset is directly proportional to the MCS. In other words, a larger MCS index indicates a larger power offset, and a smaller MCS index indicates a smaller power offset.

The following describes a specific value of the power offset by using an example with reference to the association relationship between the transmission parameter and the power offset.

It should be understood that, in this embodiment of this application, the specific value of the power offset may be one or more elements in one or more sets. The one or more sets may be preconfigured in a protocol, may be negotiated in advance between the first apparatus and the second apparatus, or may be indicated by the second apparatus. This is not specifically limited in this embodiment of this application.

For example, when the power offset is a linear value, the value of the power offset may be one or more elements in the following different sets:
set 1: 0, 0, 17, 0.2, 0.25, 0.33, 0.5, 0.75, 1;
set 2: 0, 0.1, 0.2, 0.3, 0.4, 0.5, 0.6, 0.7, 0.8, 0.9, 1 ;
set 3: 0, 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 1 ; and
set 4: 0, 0.2, 0.3, 0.4, 0.5, 0.55, 0.6, 0.65, 0.7, 0.75, 0.8, 0.85, 0.9, 0.95, 1.

The element 0 and the element 1 in the sets may be discarded. The element 1 may indicate that the power offset is 1, that is, the transmit power ratio between the data signal and the first channel is 1. In other words, after clipping processing is performed on the data signal, the transmit power of the data signal is not reduced. For details, refer to the foregoing related descriptions about the power offset 1. Details are not described herein again.

Further, the element 0 may be a reserved value, and may indicate another case when the first apparatus and the second apparatus exchange power offset indication information, for example, may indicate that a receiver side is not expected to use the power offset for demodulation, and for another example, may indicate that the data signal is not expected to be used for sensing, but for information transmission.

It should be understood that, in the set 1, the element 0.17 to the element 0.75 may indicate that transmit power ratios of the data signal to the first channel are 1/6, 1/5, 1/4, 1/3, 1/2, and 3/4. In other words, when the clipping threshold is 0.25, the first apparatus may select the foregoing six levels as power offsets. Further, when the modulation order is low, a tolerance degree for the clipping threshold is high. Therefore, a large clipping threshold may be selected, that is, a small power offset is selected, to reduce a fluctuation degree of a frequency domain waveform, to reduce impact on sensing performance. For example, when the modulation order is 4, the first apparatus may select one of the levels 1/6, 1/5, 1/4, or 1/3 as the power offset. Certainly, to balance a coverage requirement, the first apparatus does not expect that a proportion of an actual transmit power of the data signal is low, and therefore 1/4 or 1/3 may be selected as the power offset.

It may be understood that, when the modulation order is high, a tolerance degree for the clipping threshold is low, and therefore a large power offset needs to be selected. For example, 1/2 or 3/4 may be selected. Certainly, to reduce a sensing performance deterioration degree, the first apparatus does not expect a high proportion of an actual transmit power of the data signal, and therefore 1/2 may be selected as the power offset.

It may be further understood that the set 2 to the set 4 may provide more levels for selection, to satisfy the coverage requirement and the sensing requirement. An interval between different levels in the set 2 is 0.1, that is, a difference between two adjacent power offsets is 0.1. In other words, the first apparatus may select the power offset by using 0.1 as a step size. Similarly, a step size of the set 3 is 0.05, that is, the set 3 may provide a larger number of more refined levels for selection.

Further, a difference between the set 4 and the sets 1 to 3 lies in that a difference between power offsets in the set 4 is variable, and a larger power offset indicates a smaller step size. It may be understood that, as described above, the modulation order may be directly proportional to the power offset. Therefore, a higher modulation order, for example, 64-QAM, requires a larger power offset, and a constellation point (for example, a constellation point in an outermost part in FIG. 5) with a larger Euclidean distance in 64-QAM is more sensitive to the power offset. For example, after the constellation points (black-filled dots) in FIG. 5 are proportionally reduced (into unfilled dots), a constellation point with a larger Euclidean distance value has a larger offset. This more easily causes incorrect determining. Therefore, for a data signal with a high modulation order, for an interval with a small power offset, the set 4 may provide level selection with a large step, and for an interval with a large power offset, the set 4 may provide more refined step selection.

It may be understood that, the power offset may alternatively be a logarithmic value. A unit of the logarithmic value may be dB. For example, a ratio 1 corresponds to 0 dB, a ratio 1/2 corresponds to -3 dB, and a ratio 1/3 corresponds to -4.77 dB. The logarithmic value may be a negative value or a positive value. This is not specifically limited in this embodiment of this application.

For example, the value of the power offset may be one or more elements in the following plurality of sets:
set 5: 0 dB, -1 dB, -2 dB, -3 dB, -4 dB, -4.77 dB, -5 dB, -6 dB, -7 dB, -8 dB, -8.45 dB, -10 dB, and -30 dB;
set 6: 0 dB, -0.5 dB, -1 dB, -1.5 dB, -2 dB, -2.5 dB, -3 dB, -3.5 dB, -4.5 dB, -4.77 dB, -5 dB, -5.5 dB, -6 dB, -6.5 dB, -7 dB, -7.5 dB, -8 dB, -8.45 dB, -10 dB, and -30 dB;
set 7: 0 dB, 1 dB, 2 dB, 3 dB, 4 dB, 4.77 dB, 5 dB, 6 dB, 7 dB, 8 dB, 8.45 dB, 10 dB, and 30 dB; and
set 8: 0 dB, 0.5 dB, 1 dB, 1.5 dB, 2 dB, 2.5 dB, 3 dB, 3.5 dB, 4.5 dB, 4.77 dB, 5 dB, 5.5 dB, 6 dB, 6.5 dB, 7 dB, 7.5 dB, 8 dB, 8.45 dB, 10 dB, and 30 dB.

It may be understood that a range of power offsets corresponding to the set 5 and the set 6 is (0, 1], and power offsets in the set 7 and the set 8 are greater than or equal to 1. Further, the set 6 may provide a larger number of more refined power offsets than the set 5, and the set 8 may provide a larger number of more refined power offsets than the set 7.

Based on the association relationship between the transmission parameter and the power offset and the specific value of the power offset that are described above, the following describes a correspondence between the power offset and the transmission parameter, so that the first apparatus determines the power offset.

In a possible implementation, the transmission parameter may further include a time domain resource and/or a frequency domain resource used to transmit the data signal. The power offset may be in one-to-one correspondence with the time domain resource and/or the frequency domain resource used to transmit the data signal. The time domain resource and/or the frequency domain resource used to transmit the data signal may be a resource allocated by using a configuration grant (configured grant, CG), or may be a dynamic resource scheduled by using DCI. In other words, the first apparatus may determine the power offset based on the time domain resource and/or the frequency domain resource for transmitting the data signal.

Optionally, the power offset may be in one-to-one correspondence with a modulation order. In other words, the first apparatus may determine the power offset based on the modulation order.

Optionally, the power offset may be in one-to-one correspondence with an MCS. In other words, the first apparatus may determine the power offset based on the MCS.

Optionally, the power offset may be in one-to-one correspondence with a clipping threshold. In other words, the first apparatus may determine the power offset based on the clipping threshold.

Optionally, the power offset may be in one-to-one correspondence with a constellation diagram. In other words, the first apparatus may determine the power offset based on the constellation diagram.

It should be understood that the constellation diagram may be different from a conventional constellation diagram corresponding to a modulation order. 64-QAM is used as an example. The conventional constellation diagram may be a constellation diagram corresponding to 64-QAM shown in FIG. 5, and 64 constellation points in the conventional constellation diagram are evenly distributed in a form of eight rows and eight columns. Being different from the conventional constellation diagram corresponding to 64-QAM may mean that 64 constellation points may be unevenly distributed in a form of eight rows and eight columns. Alternatively, being different from the conventional constellation diagram corresponding to 64-QAM may mean that 64 constellation points are not distributed in a form of eight rows and eight columns. For example, the 64 constellation points are distributed in a form of four rows and 16 columns. For another example, the 64 constellation points are distributed in a form of two rows and 32 columns.

It may be understood that, different constellation point distributions may cause different offsets between the modulation symbol and the constellation point actually corresponding to the modulation symbol in the foregoing "floor clipping", and therefore different constellation diagrams may correspond to different power offsets.

It should be understood that a type of parameters (for example, the modulation order or the clipping threshold) in the transmission parameter may correspond to a plurality of power offsets, that is, one value of the type of parameters may correspond to a plurality of power offsets. Further, the first apparatus may select one power offset from the plurality of power offsets as the power offset. For example, when a value of the modulation order is 4, the modulation order may correspond to three different power offsets, and the first apparatus may select one of the three power offsets as the power offset.

Alternatively, a combination of a plurality of types of parameters in the foregoing transmission parameter may correspond to one power offset, so that the first apparatus can determine the power offset based on the combination of the plurality of types of parameters.

For example, Table 14 shows a correspondence between a power offset, a modulation order, and a clipping threshold.

**Table 14**

| Modulation order | Clipping threshold (proportion value) | Power offset (logarithmic value) |
|---|---|---|
| 2 | 0.2 | 0 dB |
| | 0.5 | -1 dB |
| 4 | 0.2 | -2 dB |
| | 0.5 | -3 dB |
| 8 | 0.2 | -4.77 dB |
| | 0.5 | |

When the modulation order is 2 and the clipping threshold is 0.5, the first apparatus may determine that the power offset is -1 dB. Alternatively, when the modulation order is 8 and the clipping threshold is 0.2, the first apparatus may determine that the power offset is -4.77 dB.

It may be understood that Table 14 is merely an example, and there may be another correspondence between the power offset, the modulation order, and the clipping threshold. This is not specifically limited in this embodiment of this application.

It should be understood that, when the power offset is determined by the first apparatus, the first apparatus may send power offset indication information to the second apparatus, or the first apparatus may not send the power offset indication information to the second apparatus. It may be understood that, because the power offset is directly proportional to the modulation order, a higher modulation order indicates a larger power offset, and a larger offset of the modulation symbol carried in the data signal in the constellation diagram. In other words, a larger modulation order indicates greater impact of the clipping processing on an amplitude (or a complex value or a modulus value of the modulation symbol) of the constellation point of the modulation symbol carried in the data signal. Therefore, the second apparatus may determine an amplitude of the data signal based on the transmit power ratio (or the EPRE ratio) between the data signal and the reference signal associated with the first channel, to reduce a bit error rate when the second apparatus demodulates the data signal.

For example, when the modulation order of the data signal is greater than a second threshold, the first apparatus sends the power offset indication information to the second apparatus. In this way, the second apparatus may determine, based on the power offset indication information, the transmit power ratio between the data signal and the reference signal associated with the first channel, to reduce a bit error rate when the second apparatus demodulates the data signal.

For another example, when the modulation order of the data signal is less than or equal to the second threshold, the first apparatus does not send the power offset indication information to the second apparatus. It may be understood that, when a modulation order is low, the clipping processing has small impact on the complex value or the modulus value of the modulation symbol carried in the data signal. In this way, the second apparatus can determine the amplitude of the data signal based on the preconfigured transmit power ratio (or the EPRE ratio) between the first channel and the reference signal associated with the first channel. In other words, when the modulation order of the data signal is low, the second apparatus may not sense the power offset, that is, the second apparatus may not sense the clipping processing of the data signal, thereby reducing indication overheads of the power offset.

It may be understood that the second threshold may be 2, 4, 8, or another modulation order. This is not specifically limited in this embodiment of this application.

The following describes the power offset indication information exchanged between the first apparatus and the second apparatus.

Optionally, the method shown in FIG. 7 further includes the following step.

S704: The first apparatus sends indication information to the second apparatus. Correspondingly, the second apparatus receives the indication information from the first apparatus. The indication information indicates the power offset. In other words, when the power offset is determined by the first apparatus, the first apparatus may send the indication information indicating the power offset to a second apparatus, so that the second apparatus can determine, based on the power offset, the transmit power ratio between the data signal and a reference signal associated with the first channel, and determine, based on the transmit power ratio, an amplitude of the received data signal, thereby reducing a bit error rate when the second apparatus demodulates the data signal.

Optionally, the method shown in FIG. 7 further includes the following step.

S705: The second apparatus sends indication information to the first apparatus. Correspondingly, the first apparatus receives the indication information from the second apparatus. The indication information indicates the power offset. In other words, the power offset may be indicated by the second apparatus, and the first apparatus may determine the power offset based on the indication information, so that flexibility of determining the power offset by the first apparatus can be increased, thereby being applicable to different scenarios.

It may be understood that for uplink transmission, the indication information may be carried in uplink control information (uplink control information, UCI). For downlink transmission, the indication information may be carried in one or more of an RRC message, DCI, or a MAC control element (MAC control element, MAC CE). The RRC message may be an RRC setup (RRC setup) message, an RRC resume (RRC resume) message, an RRC reconfiguration (RRC reconfiguration) message, or the like. That is, the second apparatus may send the indication information to the first apparatus in any RRC connection state.

For example, for the foregoing manner 1, the indication information may be carried in RRC signaling, and the RRC message may be an RRC message that carries an index j of a parameter set. For another example, for the foregoing manner 2, the indication information may be carried in DCI or a MAC control element MAC CE, and the DCI or the MAC CE may be DCI or a MAC CE that carries TPC. For another example, for the foregoing manner 3, the indication information may be carried in DCI, and the DCI may be DCI that carries uplink scheduling information. For another example, for the foregoing manner 4, the indication information may be carried in one or more of an RRC message, DCI, or a MAC CE. For another example, for uplink transmission in the foregoing solution 1, the indication information may be carried in UCI.

It may be understood that the indication information may directly indicate the specific value corresponding to the power offset, for example, 1/2 or -3 dB.

In a possible implementation, the indication information includes first indication information, and the first indication information is for determining the power offset from a candidate power offset set. The candidate power offset set includes at least two power offsets. It may be understood that indexes or identifiers may be configured, in one-to-one correspondence, for the at least two power offsets in the candidate power offset set, and the first indication information may be an index or an identifier. In other words, the first indication information may be an index or an identifier of the power offset in the candidate power offset set, so that indication overheads of the indication information can be reduced, thereby improving reliability of the indication information.

It may be understood that the index of the power offset may be a digit, a letter, or another symbol. This is not specifically limited in this embodiment of this application.

Indexes of the power offsets may be sorted in ascending order or in descending order based on numeric values, and the sorting may start from zero or another non-zero value.

For example, Table 15 shows a correspondence between an index and a power offset by using the plurality of power offsets shown in Table 14 as examples.

**Table 15**

| Index | Power offset |
|---|---|
| U1 | 0 dB |
| U2 | -1 dB |
| U3 | -2 dB |
| U4 | -3 dB |
| U5 | -4.77 dB |

It may be further understood that different indexes may alternatively correspond to a same power offset. For example, the indexes in Table 15 may further include an index U6, and the index U6 may correspond to the power offset -4.77 dB. In other words, the indexes U5 and U6 indicate the same power offset.

It may be further understood that the first indication information may include one or more indexes. In other words, the second apparatus may indicate one or more power offsets to the first apparatus. Further, when the first indication information indicates a plurality of power offsets, the first apparatus may select one power offset from the plurality of power offsets. For example, the first apparatus may select a proper power offset from a plurality of power offsets based on factors such as a performance parameter and a working condition of a transceiver component.

It should be understood that, when the power offset is associated with the transmission parameter, the index may also be associated with the transmission parameter. In this way, some unknown transmission parameters may be further determined based on the index.

For example, Table 16 shows a correspondence between an index, a modulation order, a clipping threshold, and a power offset by using Table 14 as an example.

**Table 16**

| Index | Modulation order | Clipping threshold (proportion value) | Power offset |
|---|---|---|---|
| U1 | 2 | 0.2 | 0 dB |
| U2 | | 0.5 | -1 dB |
| U3 | 4 | 0.2 | -2 dB |
| U4 | | 0.5 | -3 dB |
| U5 | 8 | 0.2 | -4.77 dB |
| U6 | | 0.5 | |

As shown in Table 16, when the second apparatus sends the indication information to the first apparatus, the first apparatus may determine the clipping threshold by using an index and an MCS (that is, a modulation order) that is scheduled by the second apparatus. It may be understood that the clipping threshold used by the first apparatus to perform clipping processing on the data signal may not be the same as a clipping threshold corresponding to the index, but may be close to the clipping threshold corresponding to the index.

It may be understood that, with reference to the foregoing Table 14 to Table 16, the indication information may indicate the power offsets Δ*Th* in Table 6 to Table 13, to update Table 6 to Table 13.

It may be understood that the candidate power offset set may be preconfigured in a protocol, or may be negotiated in advance between the first apparatus and the second apparatus. This is not specifically limited in this embodiment of this application.

In a possible implementation, the indication information further includes second indication information, and the second indication information indicates the candidate power offset set. In other words, the second apparatus may configure the candidate power offset set for the first apparatus, to indicate, to the first apparatus, a plurality of power offsets expected by the second apparatus in a next period of time (for example, RRC connection duration).

It may be understood that the second indication information may be carried in an RRC message or another message. This is not specifically limited in this embodiment of this application.

In this embodiment of this application, the first apparatus may determine the power offset, and determine the transmit power ratio between the data signal and the first channel based on the power offset, so that the target transmit power of the first channel can be determined, to compensate for an offset, generated in a constellation diagram due to the clipping processing performed on the data signal, of a modulation symbol carried in the data signal, thereby reducing a probability of misjudgment when a receiver side demodulates the data signal. Therefore, according to the power control method provided in embodiments of this application, a bit error rate in a data signal transmission process can be reduced.

The foregoing mainly describes the solutions provided in this application. Correspondingly, this application further provides a communication apparatus. The communication apparatus is configured to implement various methods in the foregoing method embodiment. The communication apparatus may be the first apparatus in the method embodiment, an apparatus including the first apparatus, or a component that can be used in the first apparatus, for example, a chip or a chip system. Alternatively, the communication apparatus may be the second apparatus in the method embodiment, an apparatus including the second apparatus, or a component that can be used in the second apparatus, for example, a chip or a chip system.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiment. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

For example, the communication apparatus is the first apparatus or the second apparatus in the foregoing method embodiment. FIG. 8 is a diagram of a structure of a communication apparatus according to an embodiment of this application. As shown in FIG. 8, the communication apparatus 800 includes a processing module 801 and a transceiver module 802. The processing module 801 is configured to perform a processing function of the first apparatus or the second apparatus in the foregoing method embodiment. The transceiver module 802 is configured to perform receiving and sending functions of the first apparatus or the second apparatus in the foregoing method embodiment.

All related content of the steps in the foregoing method embodiment may be cited in function descriptions of the corresponding functional modules. Details are not described herein again.

The communication apparatus 800 provided in this embodiment can perform the foregoing method. Therefore, for technical effects that can be achieved by the communication apparatus, refer to the foregoing method embodiment. Details are not described herein again.

In a possible design solution, in this embodiment of this application, the transceiver module 802 may include a receiving module and a sending module (not shown in FIG. 8). The transceiver module is configured to implement a sending function and a receiving function of the communication apparatus 800.

In a possible design solution, the communication apparatus 800 may further include a storage module (not shown in FIG. 8), and the storage module stores a program or instructions. When the processing module 801 executes the program or the instructions, the communication apparatus 800 is enabled to perform functions of the first apparatus or the second apparatus in the method shown in FIG. 7.

It should be understood that the processing module 801 in the communication apparatus 800 may be implemented by a processor or a processor-related circuit component, or may be a processor or a processing unit. The transceiver module 802 may be implemented by a transceiver or a transceiver-related circuit component, or may be a transceiver or a transceiver unit.

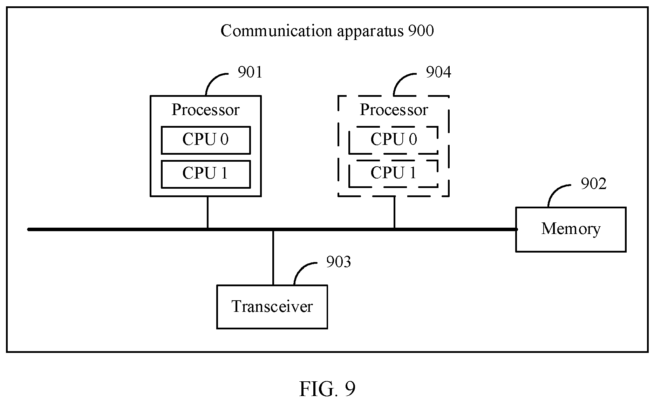

For example, FIG. 9 is a diagram of a structure of another communication apparatus according to an embodiment of this application. The communication apparatus may be a first apparatus or a second apparatus, or may be a chip (system) or another part or component that may be disposed in the first apparatus or the second apparatus. As shown in FIG. 9, the communication apparatus 900 may include a processor 901.

In a possible design solution, the communication apparatus 900 may further include a memory 902 and/or a transceiver 903. The processor 901 is coupled to the memory 902 and the transceiver 903, for example, may be connected to the memory 902 and the transceiver 903 through a communication bus.

The following describes the components of the communication apparatus 900 in detail with reference to FIG. 9.

The processor 901 is a control center of the communication apparatus 900, and may be one processor, or may be a collective term for a plurality of processing elements. For example, the processor 901 is one or more central processing units (central processing unit, CPU), or may be an application-specific integrated circuit (application-specific integrated circuit, ASIC), or is configured as one or more integrated circuits for implementing embodiments of this application, for example, one or more microprocessors (digital signal processor, DSP) or one or more field programmable gate arrays (field programmable gate array, FPGA).

In a possible design solution, the processor 901 may perform various functions of the communication apparatus 900 by running or executing a software program stored in the memory 902 and invoking data stored in the memory 902.

During specific implementation, in an embodiment, the processor 901 may include one or more CPUs, for example, a CPU 0 and a CPU 1 shown in FIG. 9.

During specific implementation, in an embodiment, the communication apparatus 900 may alternatively include a plurality of processors, for example, the processor 901 and a processor 904 shown in FIG. 9. Each of the processors may be a single-core processor (single-CPU), or may be a multi-core processor (multi-CPU). The processor herein may be one or more devices, circuits, and/or processing cores configured to process data (for example, computer program instructions).

The memory 902 is configured to store a software program for performing the solutions in this application, and the processor 901 controls execution. For a specific implementation, refer to the foregoing method embodiment. Details are not described herein again.

In a possible design solution, the memory 902 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic storage medium or another magnetic storage device, or any other medium that can be used to carry or store expected program code in a form of instructions or a data structure and that can be accessed by a computer. However, this is not limited thereto. The memory 902 may be integrated with the processor 901; or may exist independently, and is coupled to the processor 901 through an interface circuit (not shown in FIG. 9) of the communication apparatus 900. This is not specifically limited in this embodiment of this application.

The transceiver 903 is configured to communicate with another communication apparatus. For example, the communication apparatus 900 is a first apparatus, and the transceiver 903 may be configured to communicate with a second apparatus, or communicate with another second apparatus. For another example, the communication apparatus 900 is a second apparatus, and the transceiver 903 may be configured to communicate with a first apparatus, or communicate with another first apparatus.

In a possible design solution, the transceiver 903 may include a receiver and a transmitter (not separately shown in FIG. 9). The receiver is configured to implement a receiving function, and the transmitter is configured to implement a sending function.

In a possible design solution, the transceiver 903 may be integrated with the processor 901, or may exist independently, and is coupled to the processor 901 through an interface circuit (not shown in FIG. 9) of the communication apparatus 900. This is not specifically limited in this embodiment of this application.

It should be noted that a structure of the communication apparatus 900 shown in FIG. 9 does not constitute a limitation on the communication apparatus. An actual communication apparatus may include more or fewer components than those shown in the figure, or combine some components, or have different component arrangement.

In addition, for technical effect of the communication apparatus 900, refer to the technical effect of the method in the foregoing method embodiment. Details are not described herein again.

In a possible implementation, an embodiment of this application further provides a computer-readable storage medium. The computer-readable storage medium stores a computer program or instructions. When the computer program or the instructions are executed by a computer, functions in the method embodiment are implemented.

In a possible implementation, an embodiment of this application further provides a computer program product. When the computer program product is executed by a computer, functions in the method embodiment are implemented.

In a possible implementation, an embodiment of this application further provides a communication system. The communication system includes the first apparatus in the method embodiment and the second apparatus in the method embodiment.

In a possible implementation, an embodiment of this application further provides a communication method. The communication method includes the method in any one of the foregoing method embodiments or the implementations of the foregoing method embodiments.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be omitted or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, the specification and accompanying drawings are merely example description of this application defined by the accompanying claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A power control method, wherein the method comprises:
generating a data signal that has undergone clipping processing;
determining a power offset, wherein the power offset is for determining a transmit power ratio between the data signal and a first channel, and the first channel is a channel that carries the data signal; and
determining a target transmit power of the first channel based on the power offset.

2. The method according to claim 1, wherein the method further comprises:
sending indication information, wherein the indication information indicates the power offset.

3. The method according to claim 1, wherein the method further comprises:
receiving indication information, wherein the indication information indicates the power offset.

4. A power control method, wherein the method comprises:
generating indication information, wherein the indication information indicates a power offset corresponding to a data signal that has undergone clipping processing, the power offset is for determining a transmit power ratio between the data signal and a first channel, and the first channel is a channel that carries the data signal; and
sending the indication information.

5. A power control method, wherein the method comprises:
receiving indication information, wherein the indication information indicates a power offset corresponding to a data signal that has undergone clipping processing, the power offset is for determining a transmit power ratio between the data signal and a first channel, and the first channel is a channel that carries the data signal; and
determining the power offset based on the indication information.

6. The method according to any one of claims 2 to 5, wherein the indication information comprises first indication information, the first indication information is for determining the power offset from a candidate power offset set, and the candidate power offset set comprises at least two power offsets.

7. The method according to claim 6, wherein the indication information further comprises second indication information, and the second indication information indicates the candidate power offset set.

8. The method according to any one of claims 1 to 7, wherein the power offset is the transmit power ratio between the data signal and the first channel;
the power offset is a ratio between an actual amplitude of a modulation symbol and an amplitude of a constellation point corresponding to the modulation symbol, wherein the modulation symbol is a modulation symbol carried in the data signal; or
the power offset is a difference between a complex value corresponding to the modulation symbol and a complex value of the constellation point corresponding to the modulation symbol.

9. The method according to claim 8, wherein the target transmit power is determined based on the power offset and a power control parameter of the first channel, and the power control parameter of the first channel comprises at least one of the following: a maximum transmit power of a terminal apparatus, an open-loop power control parameter, a closed-loop power control parameter, or a modulation and coding scheme MCS, wherein the open-loop power control parameter is for determining an open-loop power of the first channel, the closed-loop power control parameter is for determining a closed-loop power adjustment value of the first channel, and the MCS is for determining an MCS power adjustment amount.

10. The method according to claim 8 or 9, wherein the transmit power ratio between the data signal and the first channel comprises any one of the following:
a ratio between a transmit power of the data signal and the open-loop power of the first channel;
a ratio between the transmit power of the data signal and the closed-loop power adjustment value of the first channel;
a ratio between the transmit power of the data signal and the MCS power adjustment amount of the first channel; or
a ratio between the transmit power of the data signal and the maximum transmit power of the terminal apparatus corresponding to the first channel.

11. The method according to claim 10, wherein the open-loop power comprises a target receive power and/or a path loss compensation power; and the ratio between the transmit power of the data signal and the open-loop power of the first channel comprises a ratio between the transmit power of the data signal and the target receive power, or a ratio between the transmit power of the data signal and the path loss compensation power.

12. The method according to claim 11, wherein the target receive power comprises a common target receive power and a dedicated target receive power of the terminal apparatus, and the ratio between the transmit power of the data signal and the target receive power comprises: a ratio between the transmit power of the data signal and the common target receive power, or a ratio between the transmit power of the data signal and the dedicated target receive power.

13. The method according to any one of claims 10 to 12, wherein the target transmit power is determined based on an adjusted open-loop power and at least one of the following: the closed-loop power adjustment value, the MCS power adjustment amount, and the maximum transmit power of the terminal apparatus, and the adjusted open-loop power is obtained by adjusting the open-loop power based on the power offset.

14. The method according to claim 13, wherein the target transmit power is determined based on an adjusted closed-loop power adjustment value and at least one of the following: the open-loop power, the MCS power adjustment amount, and the maximum transmit power of the terminal apparatus, and the adjusted closed-loop power adjustment value is obtained by adjusting the closed-loop power adjustment value based on the power offset.

15. The method according to claim 10, wherein the ratio between the transmit power of the data signal and the MCS power adjustment amount is for adjusting a bits per resource element BPRE.

16. The method according to claim 10 or 15, wherein the target transmit power is determined based on an adjusted MCS power adjustment amount and at least one of the following: the open-loop power, the closed-loop power adjustment value, and the maximum transmit power of the terminal apparatus, and the adjusted MCS power adjustment amount is obtained by adjusting the MCS power adjustment amount based on the power offset.

17. The method according to claim 10, wherein the ratio between the transmit power of the data signal and the maximum transmit power of the terminal apparatus comprises a ratio or a difference between a maximum power reduction MPR value and a preconfigured MPR value.

18. The method according to claim 10 or 17, wherein the target transmit power is determined based on an adjusted maximum transmit power of the terminal apparatus and at least one of the following: the open-loop power, the closed-loop power adjustment value, and the MCS power adjustment amount, and the adjusted maximum transmit power of the terminal apparatus is obtained by adjusting the maximum transmit power of the terminal apparatus based on the power offset.

19. The method according to any one of claims 1 to 7, wherein the power offset is a transmit power ratio between the data signal and a reference signal associated with the first channel;
the power offset is an energy per resource element EPRE ratio between the data signal and the reference signal; or
the power offset is a ratio between the transmit power ratio and a preconfigured transmit power ratio, and the preconfigured transmit power ratio is an EPRE ratio between the first channel and the reference signal.

20. The method according to claim 19, wherein the target transmit power is determined based on the power offset and a transmit power of the reference signal.

21. The method according to claim 19 or 20, wherein the reference signal comprises a demodulation reference signal DMRS and/or a phase tracking reference signal PTRS.

22. The method according to any one of claims 1 to 21, wherein the power offset is associated with a transmission parameter that is for transmitting the signal, and the transmission parameter comprises at least one of:
an MCS for transmitting the data signal, a modulation scheme for transmitting the data signal, a constellation diagram for transmitting the data signal, a modulation order for transmitting the data signal, or a clipping threshold for performing clipping processing on the data signal.

23. A communication apparatus, wherein the communication apparatus comprises a module or a unit configured to perform the method according to any one of claims 1 to 3 or 6 to 22, comprises a module or a unit configured to perform the method according to any one of claims 4 or 6 to 22, or comprises a module or a unit configured to perform the method according to any one of claims 5 to 22.

24. A communication apparatus, wherein the communication apparatus comprises a processor, and the processor is configured to enable, by using a logic circuit and/or executing instructions, the communication apparatus to perform the method according to any one of claims 1 to 3 or 6 to 22, the communication apparatus to perform the method according to any one of claims 4 or 6 to 22, or the communication apparatus to perform the method according to any one of claims 5 to 22.

25. The communication apparatus according to claim 24, wherein the communication apparatus further comprises a memory, and the memory is configured to store the instructions.

26. The communication apparatus according to claim 24 or 25, wherein the communication apparatus further comprises a communication interface, and the communication interface is configured to input and/or output signaling and/or data.

27. A computer-readable storage medium, wherein the computer-readable storage medium comprises instructions; and when the instructions are run by a processor, the method according to any one of claims 1 to 3 or 6 to 22 is implemented, the method according to any one of claims 4 or 6 to 22 is implemented, or the method according to any one of claims 5 to 22 is implemented.

28. A computer program product, wherein the computer program product comprises instructions; and when the instructions are run on a computer, the computer is enabled to perform the method according to any one of claims 1 to 3 or 6 to 22, the computer is enabled to perform the method according to any one of claims 4 or 6 to 22, or the computer is enabled to perform the method according to any one of claims 5 to 22.

29. A communication system, wherein the communication system comprises a first apparatus and a second apparatus, the first apparatus is configured to perform the method according to any one of claims 1 to 3 or 6 to 22, and the second apparatus is configured to perform the method according to any one of claims 4 or 6 to 22, or the second apparatus is configured to perform the method according to any one of claims 5 to 22.
